# EUROPÄISCHE PATENTSCHRIFT

(11) **EP 3 512 899 B1**
(45) Veröffentlichungstag und Bekanntmachung des Hinweises auf die Patenterteilung: **10.11.2021**
(21) Anmeldenummer: 17765165.0
(22) Anmeldetag: 11.09.2017
(51) Int. Cl.: C08G 63/64, C08G 63/664, C08G 63/685

(54) **POLYESTERMODIFIZIERTE AMINOADDUKTE**
POLYESTER MODIFIED AMINO ADDUCTS
ADDUITS AMINÉS MODIFIÉS PAR POLYESTER

(30) Priorität: 16.09.2016 EP 16002018
(43) Veröffentlichungstag der Anmeldung: 24.07.2019
(73) Patentinhaber: BYK-Chemie GmbH, 46483 Wesel (DE)
(72) Erfinder: GIEBELHAUS, Irina, 46483 Wesel (DE); OKKEL, Andreas, 46483 Wesel (DE); PRITSCHINS, Wolfgang, 46483 Wesel (DE)
(74) Vertreter: Altana IP Department
(86) Internationale Anmeldenummer: PCT/EP2017/072698
(87) Internationale Veröffentlichungsnummer: WO 2018/050582

(56) Entgegenhaltungen:
- EP-B1- 2 780 391
- WO-A2-2012/030600
- US-A1- 2003 120 029
- YAMAGUCHI K: "Mfg. integrated circuit with high speed transistor - involves forming electrode with metal nitride film and aluminium (alloy) film NoAbstract Dwg 0/2", WPI / THOMSON,, Bd. 1988, Nr. 8, 19. Januar 1988 (1988-01-19), XP002674118,

## Beschreibung

Die vorliegende Erfindung betrifft ein Verfahren zur Herstellung eines Aminaddukts, das Aminaddukt sowie dessen Verwendung und einen Lack und/oder Kunststoff.

Netzmittel, welche gelöst oder dispergiert in einer Flüssigkeit vorliegen, setzen die Oberflächenspannung bzw. die Grenzflächenspannung herab und vergrößern so das Netzvermögen der Flüssigkeit. Auf diese Weise ermöglichen Netzmittel in vielen Fällen erst überhaupt eine Oberflächenbenetzung.

Dispergiermittel eignen sich im Allgemeinen zur Stabilisierung von Feststoffteilchen in Bindemitteln, Lacken, Pigmentpasten, Kunststoffen und Kunststoffmischungen, Kleb- und Dichtstoffen, zur Reduktion der Viskosität entsprechender Systeme sowie zur Verbesserung der Fließeigenschaften. Dispersionsstabilisatoren werden zur Stabilisierung bereits erzeugter Dispersionen eingesetzt.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Im Falle derartiger Dispergiermittel handelt es sich um oberflächenaktive Stoffe, anionischer, kationischer und/ oder neutraler Struktur.

Diese Stoffe werden in kleiner Menge entweder direkt auf den Feststoff aufgebracht oder dem Dispergiermedium zugesetzt. Zu beachten ist, dass auch nach vollständiger Deflockulierung der Feststoffagglomerate in Primärteilchen (nach dem Dispergierprozess) Reagglomerationen auftreten können, wodurch der Dispergieraufwand teilweise oder vollständig zunichte gemacht wird. Als Folge von unzulänglicher Dispergierung bzw. von Reagglomeration treten typischerweise unerwünschte Effekte auf, wie Viskositätsanstieg in flüssigen Systemen, Farbtondrift sowie Glanzverlust in Lacken bzw. in Beschichtungen und Verringerung der mechanischen Festigkeit sowie der Materialhomogenität in Kunststoffen.

Als Netz- und Dispergiermittel kommen in der Praxis verschiedenartige Verbindungstypen in Frage. Dies ist insbesondere darin begründet, dass eine hohe Anzahl verschiedener Systeme existiert, welche insbesondere auf verschiedenartigen Bindemitteln kombiniert mit unterschiedlichen zu dispergierenden Partikeln, wie Pigmenten, Füllstoffen sowie Fasern, basiert.

Die EP-B- 2 780 391 betrifft den Einsatz von speziellen Aminaddukten, in Lacken und Kunststoffen. Besagte Aminaddukte weisen einen Polyaminkern auf, an welchem über Salz- oder Amidbindungen Polyestergruppen sowie über Kohlenstoff-Stickstoff Bindungen Kohlenwasserstoffgruppen gebunden sind. Die Polyester werden in einem getrennten Schritt durch Polymerisationsreaktion aus Monocarbonsäuren und Hydroxycarbonsäuren oder deren Lactonen hergestellt. Auf diese Weise werden lineare monofunktionelle Polyester erhalten, die an einem Kettenende eine Carboxylgruppe und am anderen Ende eine Alkylgruppe enthalten. Hydroxylgruppen sind in diesen Polymeren nicht vorhanden. Die Herstellung der Aminaddukte erfolgt dann durch Additionsreaktion dieser Polyester und einer Epoxidverbindung an das Polyamin. Die Polyesteraddition erfolgt dabei vermutlich hauptsächlich an den gut zugänglichen Aminogruppen im äußeren Bereich der Polyamine. Insbesondere bei den höhermolekularen und hochverzweigten Polyaminen sind die Aminogruppen im Kernbereich für eine Amidbildung mit den Säuregruppen der Polyester vermutlich nicht mehr zugänglich. Daher enthalten diese Addukte in der Regel neben Säuregruppen auch noch reaktive primäre oder sekundäre Aminogruppen, die durch Nebenreaktionen in einigen Anwendungen zu unerwünschten Stabilitätsproblemen führen können. Bei der Umsetzung mit den Epoxiden entstehen auch OH-Gruppen, die im Bereich des Aminkerns angesiedelt sind. An den Kettenenden der Polyesterketten sind bei diesen Polyaminaddukten allgemein keine OH-Gruppen vorhanden.

Zur Dispergierung von Feststoffen sind derartige Dispergiermittel zwar grundsätzlich geeignet, jedoch liegt diesen nur eine, insbesondere gegenüber den zu dispergierenden Feststoffen begrenzte Universalität zugrunde, die die Eignung für unterschiedliche Dispergiergieraufgaben einschränkt. Zum Beispiel, wenn besonders hohe Mengen an anorganischen Feststoffen in flüssige Systeme einzubringen sind, wie bei der Mattierung von lösemittelfreien Lacken mit kieselsäurebasierten Mattierungsmitteln, sind die mit diesen Dispergiermitteln erzielbaren Viskositätsreduktionen oft nicht ausreichend, um die erforderlichen Feststoffmengen einzubringen.

Der vorliegenden Erfindung lag somit die Aufgabe zugrunde, ein Verfahren zur Herstellung von qualitativ hochwertigen sowie möglichst universell einsetzbaren Dispergiermitteladditiven bereitzustellen, die die oben genannten Nachteile nicht aufweisen und insbesondere gute Viskositätsreduktionen bei hoch gefüllten Systemen ermöglichen.

Die Lösung dieser Aufgabe ist ein Verfahren zur Herstellung eines Aminaddukts, in welchem in einem 1. Schritt ein Polyamin (A) mit einem als Epoxid, als Oxetan oder als zyklisches Carbonat vorliegenden Monomer (C) zu einem (Zwischen)Produkt (AC) umgesetzt wird, welches in einem nachfolgenden 2. Schritt mit einem in Form eines Lactons, einer azyklischen Hydroxcarbonsäure oder eines hydroxyfunktionellen azyklischen Esters vorliegenden Monomer (B) zu einem (Folge)Produkt (ACB) umgesetzt wird, wobei
das Polyamin (A) jeweils mindestens drei aus primären und sekundären Aminogruppen ausgewählte Aminogruppen (A+) aufweist, die jeweils mit den Monomeren (C) und (B) reaktionsfähig sind,
das Monomer (C) keine Estergruppen, keine Carboxylgruppen, sowie keine primären oder sekundären Aminogruppen enthält und im 1. Schritt unter Ringöffnung sowie Entstehung einer Hydroxylgruppe (H+) mit einer der Aminogruppen (A+) des Polyamins (A) unter zusätzlicher Ausbildung entweder einer Kohlenstoff-Stickstoffbindung oder einer Urethanbindung reagiert,
das Monomer (B) keine primären oder sekundären Aminogruppen enthält, ein Molekulargewicht von 90 - 300 g/mol aufweist und im 2. Schritt in der Weise reagiert, dass gegebenenfalls im 1. Schritt nicht umgesetzte Aminogruppen (A+) zu Amidgruppen sowie im 1. Schritt entstandene Hydroxylgruppen (H+) zu Estergruppen umgesetzt werden, wobei das Monomer (B) so ausgewählt ist, dass entweder bei dessen Umsetzung zusätzlich eine terminale Hydroxylgruppe (H++) entsteht oder dass das Monomer (B) selbst bereits über eine terminale Hydroxylgruppe (H++) verfügt und dass über die terminalen Hydroxylgruppen (H++) unter Entstehung von (Poly)Estergruppen eine weitere Anlagerung des Monomers (B) erfolgt,
wobei die Verfahrensparameter so gewählt werden, dass im 1. Schritt und im 2. Schritt insgesamt mindestens 50 Mol.-% der Aminogruppen (A+) umgesetzt werden.

Das Polyamin (A), das Monomer (B) sowie das Monomer (C) können sich jeweils auch aus unterschiedlichen Spezies zusammensetzen, d.h. jeweils auch als Mischungen vorliegen.

Die molprozentuale Umsetzung der Aminogruppen (A+) wird gemessen durch Bestimmung der Aminzahl nach DIN 16945 (siehe Methodenregister im experimentellen Teil).

Wesentliche Verfahrensparameter, die relevant dafür sind, dass mindestens 50 Mol.-% der Aminogruppen (A+) umgesetzt werden, sind die Stöchiometrie der eingesetzten Komponenten und die Reaktionsbedingungen (z.B. Temperatur und Reaktionszeit).

Das erfindungsgemäße Aminaddukt liegt normalerweise als ein (technisches) Rohprodukt vor, welches ggf. Lösemittel, Nebenprodukte und nicht umgesetzte Ausgangskomponenten sowie andere "Verunreinigungen" enthalten kann. Das (Folge)Produkt (ABC) bzw. nachstehend erläuterte Modifizierungsformen davon bildet bzw. bilden die Hauptkomponente des Aminaddukts.

Das Verfahren hat die Besonderheit, dass das Zwischenprodukt (AC) praktisch als eine Art "Makroinitiator" eingesetzt wird, um z.B. die Anlagerung der Hydroxycarbonsäuren oder z.B. die ringöffnende Polymerisation der Lactone zu initiieren. Auf diese Weise werden praktisch zwei Typen von Polyesterketten gebildet, die jeweils eine Hydroxylgruppe am Kettenende tragen und sich über die Art der Bindung an das Polyamin unterscheiden: Diese sind entweder über eine Amidbindung an die ursprünglichen Aminogruppen (A+) oder über eine Esterbindung an die aus der Addition von Monomer (C) entstandenen OH-Gruppen (H+) gebunden. Da die Amidierungsreaktion der Aminogruppen (A+) schneller abläuft als die Veresterung der OH-Gruppen (H+), erfolgt die "Polyesterketteninitiierung" zunächst bevorzugt an den Aminogruppen.

Die erfindungsgemäßen Aminaddukte haben keine oder eine sehr niedrige Säurezahl während die vergleichbaren Produkte (z.B. solche gemäß der EP-B- 2 780 391) allgemein eine deutliche höhere Säurezahl aufweisen, was auf eine entsprechend unvollständige Umsetzung der carboxylfunktionellen Polyester hinweist. Die Säurezahl des erfindungsgemäßen Aminaddukts liegt in der Regel unter 40, bevorzugt unter 20, besonders bevorzugt unter 10 und ganz besonders bevorzugt unter 5 mg KOH/g.

Die erfindungsgemäße Amin-initiierte ringöffnende Polyesterbildung ist erheblich schneller als die entsprechend bekannte Carboxyl-initiierte Polymerisation. Dies ist möglicherweise als eine Ursache dafür anzusehen, dass mit dem erfindungsgemäßen Verfahren qualitativ hochwertigere Produkte mit guter Wirksamkeit und geringerem Herstellungsaufwand erhalten werden können. Die nach dem erfindungsgemäßen Verfahren erhaltenen Produkte zeigen eine verbesserte Lagerstabilität, eine geringere Kristallisationsneigung und eine verbesserte Verträglichkeit mit den gängigen Lösemitteln und Bindemitteln. Aufgrund der typischerweise weitest gehenden oder optimalerweise sogar vollständigen Umsetzung der reaktiven Aminogruppen werden weniger durch reaktive Amine ausgelöste Nebenreaktionen ausgelöst, wie die Vergilbung von hellen Formulierungen (insbesondere bei Nitrocellulose haltigen Formulierungen auftretend). Generell zeigen die erfindungsgemäßen Produkte eine breite Verträglichkeit mit einer großen Anzahl von Bindemitteln und Lösemitteln. Weiterhin ist die entsprechend resultierende Viskosität von Feststoff-Dispersionen niedriger, wodurch höhere Feststoffkonzentrationen ermöglicht werden. Aufzüge und Rub-Outs diverser Feststoffe zeigen hohen Glanz, geringe Flokkulation und keine Stippen.

Bevorzugt liegt das Monomer (C) als Epoxid vor, so dass das Monomer (C) deshalb im 1. Schritt unter Ringöffnung sowie Entstehung einer Hydroxylgruppe (H+) mit einer der Aminogruppen (A+) des Polyamins (A) unter zusätzlicher Ausbildung einer Kohlenstoff-Stickstoffbindung reagiert.

Typischerweise enthält das Monomer (C) ausschließlich die Elemente Kohlenstoff, Wasserstoff sowie Sauerstoff und weist keine Hydroxylgruppen auf.

Insbesondere wenn das Monomer (C) als Epoxid vorliegt, weist es maximal drei Sauerstoffatome, bevorzugt genau ein Sauerstoffatom und 6 bis 70, bevorzugt 6 bis 32 Kohlenstoffatome auf.

Eine Anzahl von weniger als 6 Kohlenstoffatomen bewirkt häufig eine zu hohe Polarität, während mehr als 70 Kohlenstoffatome meist die universelle Verträglichkeit verschlechtert. Häufig enthält Monomer (C) insgesamt 6 bis 24 Kohlenstoffatome und zusätzlich maximal drei Heteroatome aus der Gruppe der Elemente O, N, P, S, Si. Andere Heteroatome (als die letztgenannten) sind erfindungsgemäß bevorzugt nicht enthalten.

Bevorzugt weist Monomer (C) jeweils genau eine Verknüpfungsgruppe auf und enthält bevorzugt keine weiteren funktionellen Gruppen, die bei der Umsetzung mit der Polyaminkomponente (A) reagieren.

Die Monofunktionalität verringert die Neigung zur Vernetzung, welche meist zu schlechter Löslichkeit, schlechter Verträglichkeit sowie zu hohen Viskositäten führt.

In einer speziellen Ausführungsform der Erfindung enthält das Monomer (C) mindestens 30 Gew. %, bevorzugt 50 bis 100 Gew. %, ungesättigte C₆-C₅₀-Monomere, welche jeweils mindestens eine Aryl- und/oder Alkylarylgruppe, aufweisen.

Aromatische Gruppen verleihen den Produkten häufig eine besonders gute Adsorptionsfähigkeit auf vielen Partikeloberflächen.

Gemäß einer besonderen Variante der Erfindung enthält das Monomer (C) mindestens 30 Gew. %, bevorzugt 50 bis 100 Gew. %, C₁₀-C₇₀-Monomere, welche jeweils mindestens einen verzweigten Alkyl- und/ oder einen verzweigten Alkenylrest enthalten. Verzweigte Gruppen verursachen oft eine bessere Löslichkeit und begünstigen in der Regel die universelle Verträglichkeit.

Als Monomer (C) geeignete epoxifunktionelle Stoffe sind zum Beispiel aliphatische, cycloaliphatische und/oder aromatische Glycidylether, Glycidylester und Olefinoxide wie C₁-C₂₀- Alkylglycidylether, Phenylglycidether, Kresylglycidylether, Naphthylglycidylether, Butylglycidether, p-tert.-Butyl-phenylglycidether, 2-Ethyl-Hexylglycidether, C₁₂-C₁₄-Glycidether, Allylglycidylether, 2,3-Epoxypropylneodecanoat (Cardura® E 10, Resolution Performance Products), C4-C28-Olefinoxide wie 1,2-Octenoxid, 1,2-Nonenoxid, 1,2-Undecenoxid, 1,2-Dodecenoxid, 1,2-Octadecenoxid, 4-Methyl-1,2-pentenoxid, Styroloxid, Butadienmonoxid, Isoprenmonoxid, Cyclopentenoxid und/oder 2-Ethyl-1,2-butenoxid. Bevorzugt sind monofunktionelle Epoxide.

Als Monomer (C) geeignete Oxetane sind neben dem unsubstituierten Oxetan, dessen Alkyl, Aryl und Hydroxyalkylderivate wie 3-Ethyl-3-(phenoxymethyl)oxetan und 3-Ethyl-3-(hydroxymethyl)oxetan, 3-Ethyl-3-(2-ethylhexyloxymethyl)oxetane, 3-Methyl-3-(hydroxymethyl)oxetane und Ethylhexyl oxetane sowie dessen an der Hydroxygruppe ethoxylierte und/oder propoxylierte Derivate mit 1 - 20 Ethylenoxid- und/oder Propylenoxid-Einheiten, die statistisch, blockweise oder gradientenartig angeordnet sein können.

Bei der Umsetzung der Polyamine mit den Epoxiden und Oxetanen entsteht eine sekundäre oder primäre Hydroxygruppe und am reaktionsbeteiligten Stickstoffatom eine sekundäre oder tertiäre Aminogruppe.

Als Monomer (C) geeignet sind ebenfalls zyklische Alkylencarbonate mit 5 oder 6-gliedrigen Ringen, die gegebenenfalls substituiert sein können. Als Substituenten sind aliphatische, cycloaliphatische und/oder aromatische Gruppen mit bis zu 30 Kohlenstoffatomen geeignet. Geeignete zyklische Carbonate sind zum Beispiel Ethylencarbonat, Propylencarbonat, Glycerincarbonat, 5-Methyl-5-propyltrimethylencarbonat, Trimethylencarbonat, 4-Methyltrimethylencarbonat, 5-Methyltrimethylencarbonat, 5,5-Dimethyltrimethylencarbonat oder 5,5-Diethyltrimethylencarbonat. Bevorzugt sind Ethylencarbonat, Propylencarbonat und Glycerincarbonat.

Die Addition der Komponente (C) an das Polyamin (A) erfolgt zweckmäßig dosierkontrolliert durch langsame Zugabe von Komponente (C) zum vorgelegten Polyamin (A), so daß die Reaktionstemperatur von bevorzugt 80 bis 140°C nicht überschritten wird.

Bevorzugt werden die Komponenten (A) (B) und (C) in jeweils solchen stöchiometrischen Verhältnissen eingesetzt, dass insgesamt mindestens 50 Mol-%, bevorzugt 70 bis 100 Mol-% , besonders bevorzugt 100% der Gesamtheit der reaktionsfähigen Aminogruppen (A+) der eingesetzten Polyaminverbindungen (A) mit dem Monomer (B) und dem Monomer (C) umgesetzt werden.

Entsprechende Umsätze kleiner 50 % bedeuten meist Produkte mit vielen reaktiven Aminogruppen, die zu unerwünschten Nebenreaktionen neigen. Als Folge sind häufig Produktverfärbungen, reduzierte Topfzeiten sowie verschlechterte Lagerstabilitäten zu verzeichnen.

Monomer (B) liegt normalerweise als eine oder mehrere, gegebenenfalls alkylsubstituierte, Hydroxycarbonsäure wie Hydroxycaprylsäure, Ricinolsäure oder 12-Hydroxystearinsäure und/oder deren korrespondierenden cyclischen Lactone, wie Propiolacton, Valerolacton oder Caprolacton vor. Bevorzugt liegt das Monomer (B) als ein Lacton vor, so dass deshalb bei dessen Umsetzung zusätzlich eine terminale Hydroxylgruppe (H++) entsteht. Die Lactonpolymerisation wird nach bekannten Verfahren, katalysiert durch beispielsweise Brönsted-Säuren (z.B. p-Toluolsulfonsäure, Methansulfonsäure) oder Organozinnverbindungen (z.B. Dibutylzinndilaurat, Dibutylzinndiacetat), bei Temperaturen von etwa 50° C bis 200°C durchgeführt. Typischerweise liegt das Monomer (B) in Form eines Lactons vor, welches dann meist vorliegt als Caprolacton, Valerolacton und/ oder Butyrolacton. Besonders bevorzugt sind ε-Caprolacton und δ-Valerolacton und deren Mischungen.

In einer bevorzugten Ausführungsform der Erfindung entstehen durch die Umsetzung von genau einer Spezies von Monomer (B) maximal 2 Estergruppen, bevorzugt genau eine Estergruppe, im (Folge)Produkt (ACB).

Meist ist das Monomer (B) so ausgewählt, dass im (Folge)Produkt (ACB) ausschließlich aliphatische Polyestergruppen entstehen, welche jeweils genau eine terminale OH-Gruppe aufweisen.

Zweckmäßigerweise wird Monomer (B) möglichst in solchen Mengen eingesetzt, daß neben allen reaktiven Aminogruppen (A+) auch mindestens 50%, bevorzugt 100% der durch Addition von Monomer (C) entstandenen OH-Gruppen umgesetzt werden.

Beispiele für geeignete Polyaminverbindungen (A) sind aliphatische lineare Polyamine, wie Diethylentriamin (DETA), Triethylentetramin (TETA), Tetraethylenpentamin (TEPA), Pentaethylenhexamin, Hexaethylenheptamin und höhere Homologe, höhere lineare Kondensate der allgemeinen Formel NH₂-(C₂H₄NH)ₙ-C₂H₄-NH₂ mit n >5, Dipropylentriamin, (3-(2-Aminoethyl)aminopropylamin, N,N-Bis(3-aminopropyl)methylamin, Tetramethyliminobispropylamin, N,N-Dimethyldipropylentriamin, Bis-(3-dimethylaminopropyl)amin und N,N'-Bis(3-aminopropyl)-ethylendiamin.

Typischerweise werden aliphatische verzweigte Polyamine, insbesondere Poly(C₂-C₄)-alkylenamine, mit primären, sekundären und tertiären Aminogruppen eingesetzt. Besonders geeignet sind die auch unter dem Namen Polyethylenimine bekannten Aziridinhomopolymere wie z.B. die Lupasol® Typen der Fa. BASF oder die Epomin® Typen der Fa. Nippon Shokubai. Diese werden nach bekannten Verfahren, z.B. durch die Polymerisation von Ethylenimin, hergestellt.

Meist beträgt in den organischen Polyaminverbindungen (A) das molare Verhältnis von primären zu sekundären Aminogruppen jeweils 2:1 bis 1:5 und das molare Verhältnis von primären zu tertiären Aminogruppen jeweils 3:1 bis 1:3.

Primäre Amine sind reaktiver als sekundäre Amine, so dass ein geringer Anteil an primären Aminen eine geringe Reaktivität bezüglich der Aufbaureaktion bedeuten kann.

Tertiäre Aminogruppen verursachen typischerweise eine gute Adsorption an Feststoffoberflächen sowie eine geringe Neigung zu Nebenreaktionen. Weiterhin ermöglichen die tertiären Aminogruppen hochmolekulare Strukturen, wobei die Viskosität jedoch trotzdem vergleichsweise gering bleibt.

Eine geringe Molmasse verursacht häufig eine schwache Adsorption an der Feststoffoberfläche, während eine hohe Molmasse problematisch bezüglich Handhabbarkeit und Löslichkeit sein kann.

Neben nicht modifizierten Polyaminen können auch teilweise modifizierte Polyamine, wie in der EP 0 893 155 beschrieben, eingesetzt werden. Bei diesen modifizierten Polyaminen kann es sich z.B. um Kondensate der oben beschriebenen Polyamine mit Carbonsäuren wie z.B. Stearinsäure, Ölsäure oder Tallölfettsäure handeln, die über Amidgruppierungen mit dem Polyamin verbunden sind. Auch ist es möglich, Teile des primären oder sekundären Polyamins mit Monoisocyanaten, wie Stearylisocyanat und/oder Polyisocyanaten, umzusetzen. Bevorzugt werden nicht modifizierte Polyamine eingesetzt.

Eine weitere geeignete Klasse von Polyaminen, sind Homo-, Co- oder Blockcopolymere mit mindestens drei primären oder sekundären Aminogruppen, die sich entweder durch radikalische oder ionische Polymerisationen herstellen lassen, oder mittels einer polymeranalogen Reaktion an einem bereits vorgebildeten Polymer gebildet oder in ein solches eingefügt werden. Derartige Homo-, Co- oder Blockcopolymerisate besitzen ein gewichtsmittleres Molekulargewicht von bis zu 1000000 g/mol, vorzugsweise von 600 bis 200000 g/mol. Besagte Polyamine lassen sich einzeln oder in Mischung einsetzen.

Eine weitere Gruppe von geeigneten Polyaminen sind die in der WO 2015/079033 als Zwischenprodukt PA beschriebenen Reaktionsprodukte von Aminen mit polyfunktionellen Verknüpfungskomponenten die 2 bis 6 reaktive Gruppen enthalten.

Meist weist das Polyamin (A) keine Hydroxylgruppen auf, hat ein Molekulargewicht von 200 bis 1.000.000 (bestimmt per GPC nach DIN 55672-1, 55672-2 oder 55672-3) sowie mindestens 4, bevorzugt mindestens 8 Aminogruppen (A+).

Besonders bevorzugt hat das Polyamin (A) ein Molekulargewicht von 300 bis 100.000 (Bestimmungsmethode: GPC) und enthält mindestens eine, bevorzugt zwei, besonders bevorzugt vier und ganz besonders bevorzugt sechs tertiäre Aminogruppen sowie außer Kohlenstoff, Wasserstoff und Stickstoff keine weiteren Elemente und liegt besonders bevorzugt als Polyethylenimin vor.

Normalerweise wird das Polyamin (A) im Verhältnis zum Monomer (C) in einem Gewichtsverhältnis von 1 : 0,1 bis 1 : 100, bevorzugt von 1 : 0,2 bis 1:10 , besonders bevorzugt 1 : 0,5 bis 1:5 eingesetzt.

In einer besonders bevorzugten Ausführungsform der Erfindung wird so vorgegangen, insbesondere Monomer (B) zu Monomer (C) in einem solchen molaren Verhältnis zueinander eingesetzt, dass nach Beendigung des 2. Schritts maximal 5 %, bevorzugt maximal 1 %, der im (Folge)Produkt (ACB) enthaltenen Hydroxylgruppen als im 1. Schritt entstandene Hydroxylgruppen (H+) vorliegen. Dies wird bestimmt durch die Messung der OH-Zahl nach jeder Reaktionsstufe (Methodenbeschreibung im experimentellen Teil).

Auf diese Weise wird in kontrollierter Weise Einfluss auf die Positionen der Hydroxylgruppen innerhalb des (Folge)produkts (ACB) genommen. Bei modellhafter Betrachtungsweise könnte man vermuten, dass sich - statistisch gesehen - Positionen der Hydroxylgruppen vom "Innenbereich" in den "Außenbereich" des Polymers verlagern, so dass im "Außenbereich" des Polymers eine erhöhte "Hydroxylgruppendichte" erzielt wird.

Typischerweise wird das Monomer (B) im Verhältnis zum Monomer (C) in einem Molverhältnis von 500 : 1 bis 1 : 1, bevorzugt von 100:1 bis 5:1 eingesetzt.

Normalerweise werden die Verfahrensparameter so gewählt, dass mindestens 50 Mol.-% der Aminogruppen (A+) bereits durch Schritt 1 umgesetzt werden und durch Schritt 1 und Schritt 2 insgesamt mindestens 70 Mol.-% der Aminogruppen (A+) umgesetzt werden. Bevorzugt werden alle Aminogruppen (A+) durch Schritt 1 und 2 umgesetzt.

Zweckmäßigerweise werden pro Aminogruppe (A+) 1 bis 100 mol, bevorzugt 3 bis 50 mol und besonders bevorzugt 5 bis 20 mol Monomer (B) eingesetzt.

In der Regel werden überwiegend oder ausschließlich nur die Reaktionskomponenten Polyamin (A), Monomer (C) und Monomer (B) eingesetzt, so dass das (Folge)Produkt (ACB) bezogen auf die eigene Masse insgesamt mindestens 80 Gew.-%, bevorzugt mindestens 95 Gew.-% Strukturelemente aus der Gruppe umgesetztes Polyamin (A), umgesetztes Monomer (C) und umgesetztes Monomer (B), enthält.

Der 2. Schritt wird nach vollständiger Beendigung des 1. Schritts durchgeführt.

Zweckmäßigerweise werden der 1. Schritt und der 2. Schritt jeweils bei Temperaturen unterhalb von 175 °C durchgeführt.

Durch die basischen Gruppen sind die Aminaddukte zur Salzbildung befähigt. Diese können im Sinne der Erfindung als Dispergiermittel auch in Form der entsprechenden Salze eingesetzt werden. In manchen Fällen lässt sich durch eine solche teilweise oder vollständige Versalzung eine Verbesserung der Wirksamkeit und/oder eine verbesserte Löslichkeit oder Verträglichkeit erzielen. Auch in Anwendungen, bei denen die Basizität der Produkte stört, zum Beispiel in sauer katalysierten Systemen, lassen sich häufig Verbesserungen durch teilweise oder vollständige Neutralisation erreichen.

Die Salze werden aus dem erhaltenen Reaktionsprodukt durch Neutralisation mit einer oder mehreren organischen oder anorganischen Säuren oder durch Quaternisierung erhalten. Die zu verwendende Säuremenge richtet sich nach dem Einsatzgebiet. Je nach Einzelfall können die Säurekomponenten äquimolar, im Unterschuss oder im Überschuss eingesetzt werden. Von Polycarbonsäuren kann zum Beispiel auch bis zu einem Äquivalent Polycarbonsäure pro zu neutralisierende basische Gruppe eingesetzt werden, um den Produkten einen sauren Charakter zu geben. Bevorzugt wird etwa äquimolar neutralisiert. Bevorzugt sind Salze mit organischen Carbonsäuren oder sauren Phosphorsäurestern. Beispiele für solche sauren Phosphorsäureester sind aufgeführt in EP 893 155, EP 417 490 und US 5 143 952. Beispiele für Carbonsäuren sind aliphatische und/oder aromatische Carbonsäuren wie kurz- oder langkettige Fettsäuren, Ameisensäure, Essigsäure, Neodecansäure, Ölsäure, Tallölfettsäure, Stearinsäure, Rizinolsäure, natürliche gesättigte oder ungesättigte pflanzliche oder tierische Fettsäuren und deren Maleinsäureanhydrid-Addukte, Maleinsäure, Fumarsäure, Bernsteinsäure, Dodecenylbernsteinsäure, 5-Norbornen-2,3-dicarbonsäure, Adipinsäure, Glutarsäure, Benzoesäure, Nitrobenzoesäure, Phthalsäure, Tetrahydrophthalsäure, Isophthalsäure, Terephthalsäure, dimerisierte oder trimerisierte Fettsäuren, Citronensäure und Abietinsäure.

Die Herstellung der erfindungsgemäßen Verbindungen kann, je nach Viskosität, in Substanz oder in Gegenwart von geeigneten Lösemitteln, Lösemittelgemischen oder anderen geeigneten Trägermedien durchgeführt werden. Geeignet sind alle Lösemittel oder Trägermedien, die unter den gewählten Reaktionsbedingungen nicht reaktiv sind oder deren Reaktivität gegenüber den Reaktionspartnern zu vernachlässigen ist und in denen die Reaktanden und die Reaktionsprodukte zumindest teilweise löslich sind. Hierzu zählen beispielsweise Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether wie Dipropylenglykoldimethylether, Ester von Mono-, Di- oder Polycarbonsäuren wie Ethylacetat, Butylacetat, Butyrolacton, Dimethyl-2-Methylglutarat, Triacetin, Phthalate oder andere Weichmacher, Di- oder Polycarbonsäureester, als "Dibasic Ester" bezeichnete Dialkylester von C₂-C₄-Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon und dergleichen. Zweckmäßig wählt man das oder die Lösemittel bzw. Trägermedien bereits unter Berücksichtigung des geplanten Einsatzgebietes aus. Zum Beispiel werden für erfindungsgemäße Verbindungen für den Einsatz in wasserverdünnbaren Lacksystemen oder zur Belegung von Pigmenten in wässriger Suspension nach der Pigmentsynthese bevorzugt Lösemittel eingesetzt, die ganz oder teilweise wasserverdünnbar sind. Sollen die Produkte beispielsweise dort eingesetzt werden, wo die Anwesenheit von flüchtigen organischen Verbindungen (VOC) nicht erwünscht ist, sollte die Formulierung möglichst lösemittelfrei oder in entsprechend als VOC-frei geltenden Trägermaterialien vorliegen.

Je nach Anwendungsgebiet können die zur Synthese verwendeten Lösemittel im Reaktionsgemisch verbleiben oder werden ganz oder teilweise entfernt und gegebenenfalls durch andere Lösemittel oder Trägermedien ersetzt werden.

Das Lösemittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen mittels Zusatz von Nichtlösern wie aliphatischen Kohlenwasserstoffen, beispielsweise Hexan, anschließendes Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösemittel angelöst werden oder gegebenenfalls in reiner Form beispielsweise bei Pulverlacken, eingesetzt werden oder auf inerte Träger aufgezogen werden. Für Anwendungen, bei denen die Verwendung von Feststoffen bevorzugt ist, wie Pulverlacke oder bestimmte Kunststoffverarbeitungsverfahren, können die Verbindungen auch durch weitere bekannte Verfahren in eine feste Form überführt werden. Beispiele für solche Verfahren sind Mikroverkapselung, Sprühtrocknung, Adsorption auf einen festen Träger wie SiO₂ oder das PGSS-Verfahren (Particle from Gas Saturated Solutions). Bevorzugt werden die Produkte wenn möglich ohne Lösemittel hergestellt.

Die Erfindung betrifft auch ein Aminaddukt, welches gemäß dem vorstehend beschriebenen Verfahren herstellbar ist, wobei so vorgegangen wird, insbesondere Monomer (B) zu Monomer (C) in einem solchen molaren Verhältnis zueinander eingesetzt werden, dass nach Beendigung des 2. Schritts maximal 5 %, bevorzugt maximal 1 %, der im (Folge)Produkt (ACB) enthaltenen Hydroxylgruppen als im 1. Schritt entstandene Hydroxylgruppen (H+) vorliegen.

Das erfindungsgemäße Aminaddukt weist in der Regel ein mittleres Molekulargewicht von 1500 bis 100.000, bevorzugt 3.000 bis 80.000 und besonders bevorzugt 5.000 bis 50.000 auf (bestimmt per GPC nach DIN 55672).

Die Aminzahl nach DIN 16945 der erfindungsgemäßen Aminaddukte liegt zweckmäßig im Bereich 5 bis 200 mg KOH/g, bevorzugt bei 10 bis 100 mg KOH/g und besonders bevorzugt bei maximal 50 mg KOH/g.

Die Hydroxylzahl der erfindungsgemäßen Aminaddukte liegt zweckmäßig im Bereich 5 bis 200 mg KOH/g, bevorzugt bei 10 bis 100 mg KOH/g und besonders bevorzugt bei maximal 50 mg KOH/g - die Bestimmungsmethode siehe Methodenregisternachstehend.

Weiterhin betrifft die vorliegende Erfindung die Verwendung des vorstehend beschriebenen Aminaddukts oder des Aminaddukts, welches gemäß dem vorstehend beschriebenen Verfahren herstellbar ist, als Additiv, bevorzugt, in Beschichtungen, insbesondere in Lacken, in Kunststoffen, in Pigmentpasten, in Dichtstoffen, in Kosmetika, in Keramik, in Klebstoffen, in Vergussmassen, in pigmenthaltigen Massen der Flachbildschirmtechnologie, in Spachtelmassen, in Druckfarben und in Tinten, bevorzugt in Lacken.

Bei dieser Verwendung wird das Aminaddukt bevorzugt als ein Netz- und Dispergiermittel eingesetzt.

Schließlich betrifft die vorliegende Erfindung auch einen Lack und/oder Kunststoff, der das vorstehend beschriebene Aminaddukt enthält.

Die erfindungsgemäßen Aminaddukte finden beispielsweise als Aluminiumpassivator, Dispergiermittel, Dispersionsstabilisatoren oder Netzmittel Verwendung und lassen sich beispielsweise in pigmentierten und/oder füllstoffhaltigen Produkten, beispielsweise Pigmentkonzentraten oder-pasten, Beschichtungszusammensetzungen, Dichtstoffen, Kunststoffen, Keramiken, Kosmetika, Klebstoffen, Vergussmassen, Spachtelmassen, Druckfarben und/oder Tinten einsetzen. Bevorzugt sind Pigmentkonzentrate, die mit entsprechenden Auflacksystemen gemischt werden können, wodurch pigmentierte Lacke hergestellt werden.

So können diese beispielsweise bei der Herstellung oder Verarbeitung von Lacken, Druckfarben, Tinten, beispielsweise für Tintenstrahldruck, Papierstrich, Leder- und Textilfarben, Pasten, Pigmentkonzentraten, Keramiken, Kleb- und Dichtstoffen, Vergussmassen, Kunststoffen und kosmetischen Zubereitungen eingesetzt werden, insbesondere, wenn diese Feststoffe wie Pigmente und/oder Füllstoffe enthalten. Auch bei der Herstellung oder Verarbeitung von Formmassen auf Basis von synthetischen, halbsynthetischen oder natürlichen makromolekularen Stoffen, wie Polyvinylchlorid, gesättigten oder ungesättigten Polyestern, Polyurethanen, Polystyrolen, Polyacrylaten, Polyamiden, Epoxidharzen, Polyolefinen, wie Polyethylen oder Polypropylen, können diese eingesetzt werden. Beispielsweise lassen sich die Verbindungen zur Herstellung von Vergussmassen, Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings oder Maler- und Bautenlacken verwenden.

Die erfindungsgemäßen Aminaddukte können nicht nur in Auflacksystemen für pigmentierte Lacke eingesetzt werden. Ebenfalls möglich ist der Einsatz in einem weiten Bereich von Formulierungen bzw. Produkten, wie Harzen, Ölen, Fetten, Gleitmitteln, Gummimaterialien, Dichtstoffen, Druckfarben, Tinten, Klebstoffen, Wachsen oder Beschichtungsmittelzusammensetzungen. Die Konzentrate können auch eingesetzt werden in Formulierungen, die in der Körperpflegeindustrie hergestellt werden oder in elektrischen Anwendungen, wie der Herstellung von Batterien und in der Elektronikindustrie, zum Beispiel bei der Herstellung von EMC (Epoxy Molding Compounds), zur Verkapselung von Halbleitern bei integrierten Schaltungen), in der Schiffsindustrie, im Rahmen medizinischer Anwendungen, in der Bauindustrie, bei der Erdölförderung, z.B. bei Bohrschlämmen oder in der Automobilindustrie. Beispiele schließen elektronisches Papier, wie das Display bei E-Books, die Verkapselung mikroelektronischer Chips und Leiterplatten, Unterwasserbootshautbeschichtungen, wie Anti-Fouling-Beschichtungen, Silikonröhren oder Gleitadditive für Bremskomponenten ein.

Die erfindungsgemäßen Aminaddukte können vorteilhaft auch bei der Herstellung von Farbfiltern für Flüssigkristallanzeigen, Flüssigkristallbildschirme, Farbauflösungsgeräte, Sensoren, Plasmabildschirmen, Anzeigen auf Basis der SED (Surface conduction Electron emitter Display) und für MLCC (Multi Layer Ceramic Compounds) eingesetzt werden. Die MLCC-Technologie wird bei der Herstellung von Mikrochips und Leiterplatten angewendet.

Die Verwendung in kosmetischen Präparaten kann beispielsweise zur Herstellung kosmetischer Zubereitungen wie Make-up, Puder, Lippenstifte, Haarfärbemittel, Cremes, Nagellacke und Sonnenschutzpräparaten dienen. Diese können in den üblichen Formen, beispielsweise als W/O- oder O/W-Emulsionen, Lösungen, Gele, Cremes, Lotionen oder Sprays vorliegen. Die erfindungsgemäßen Verbindungen können vorteilhaft in zur Herstellung dieser Zubereitungen verwendeten Dispersionen eingesetzt werden. Diese können die für diese Zwecke in der Kosmetik üblichen Trägermedien, wie Wasser, Ricinusöle oder Silikonöle und Feststoffe, wie organische und anorganische Pigmente, wie Titandioxid oder Eisenoxid, enthalten.

Zu nennen sind ebenfalls die Anwendungsbereiche NIP (Non impact printing), InkJet (auf Papier, Folie, Keramik, künstlichem und natürlichem Fasergewebe), Dispergieren von Keramik (wässrig oder wasserfrei), Dispergieren in Vergussmassen. Die erfindungsgemäßen Aminaddukte können auch als solches, d.h. ohne zuvor in ein entsprechendes Konzentrat eingearbeitet worden zu sein, in den zuvor genannten Formulierungen und Anwendungsbereichen zum Einsatz kommen.

Typischerweise ist das Aminaddukte sowie Pigment- und/oder Füllstoffe enthaltende Produkt ein Lack, oder ein Pigmentkonzentrat für Beschichtungszusammensetzungen. Letztlich aber ist der Einsatz der Aminaddukte in beliebigen pigmenthaltigen und/oder füllstoffhaltigen Produkten möglich.

Insbesondere handelt es sich bei den Pigmentkonzentraten um Zusammensetzungen, die neben den erfindungsgemäßen Aminaddukten beispielsweise organische Lösemittel und mindestens ein Pigment enthalten. Diese enthalten insbesondere keine oder nur geringe Anteile organischer Polymere als Bindemittel. Solche bekannten Bindemittel sind vorteilhafterweise in den entsprechenden Auflacksystemen vorhanden und werden nachstehend beschrieben.

Als organische Lösemittel kommen insbesondere die typischen im Bereich der Lack- und Farbindustrie eingesetzten, dem Fachmann bekannten organischen Lösemittel, wie aliphatische Lösemittel, cycloaliphatische Lösemittel, aromatische Lösemittel, wie Toluol, Xylol, Solventnaphtha, Ether, Ester und/oder Ketone, beispielsweise Butylglykol, Butyldiglykol, Butylacetat, Methylisobutylketon, Methylethylketon und/oder Lösemittel, wie Methoxypropylacetat, Diacetonalkohol, zum Einsatz.

Als Pigmente kommen die dem Fachmann bekannten Pigmente zu Einsatz. Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-Pigmente, Triarylmethan-Pigmente, Xanthen-Pigmente, Acridin-Pigmente, Chinacridon-Pigmente, Methin-Pigmente, Anthrachinon, Pyranthron-, Perylen-Pigmente und andere polycyclische Carbonylpigmente, anorganische Pigmente, wie Carbon Black Pigmente und/oder Pigmente auf Basis von Russ, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismutvanadat-molybdatgelb oder Chromtitangelb), magnetischen Pigmenten auf Basis von Reineisen, Eisenoxiden und Chromoxiden oder Mischoxiden, Metalleffektpigmente aus Aluminium, Zink, Kupfer oder Messing sowie Perlglanzpigmente oder fluoreszierende und phosphoreszierende Leuchtpigmente. Weitere Beispiele sind nanoskalige organische oder anorganische Feststoffe mit Teilchengrößen unterhalb von 100 nm in mindestens einer Dimension, wie bestimmte Russtypen oder andere allotrope Formen des Kohlenstoffs, wie single-wall-CNT's, multi-wall-CNT's und Graphen. Die Bestimmung der Teilchengröße erfolgt bspw. mittels Transmissionselektronenmikroskopie, analytischer Ultrazentrifugation oder Methoden der Lichtstreuung. Ebenfalls zu nennen sind Partikel, die aus einem Metall-, oder Halbmetalloxid bzw. -hydroxid bestehen, sowie Partikel, die aus gemischten Metall- und/oder Halbmetalloxiden bzw. -hydroxiden bestehen. Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie bsp. lonenaustauschprozesse, Plasmaprozesse, Sol-Gel-Verfahren, Ausfällung, Zerkleinerung (beispielsweise durch Vermahlung) oder Flammhydrolyse erfolgen. Alle vorstehend genannten Pigmente können oberflächenmodifiziert vorliegen und basische, saure oder neutrale Gruppen an der Oberfläche besitzen.

Enthalten die jeweiligen Produkte, insbesondere die Beschichtungszusammensetzungen, Füllstoffe, so handelt es sich z.B. um die dem Fachmann bekannten Füllstoffe. Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Kieselsäure, Schichtsililikate, Bentonite, Tonmineralien, Organotone, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Die eingesetzten Fasern können organischer und/oder anorganischer Natur sein und ebenso als Verstärkungsstoffe eingesetzt werden. Weitere Beispiele für Pigmente oder Füllstoffe finden sich beispielsweise in der US-A-4,795,796. Auch Flammschutzmittel, sofern die erfindungsgemäßen Verbindungen nicht bereits in üblichen Additivmengen für diesen Zweck eingesetzt werden, wie Aluminium- oder Magnesiumhydroxid sind in diesem Zusammenhang zu erwähnen.

Die Mattierung von lösemittelarmen und lösemittelfreien Systemen, wie zum Beispiel 100%igen UV-härtenden Lacken, stellt meist eine schwierige Aufgabe dar. Als Mattierungsmittel werden überwiegend gefällte Kieselsäuren, Kieselgele und pyrogene Kieselsäuren eingesetzt. Da hohe Mattierungsmittelmengen auch zu hohen Viskositäten führen, lassen sich die für stärkere Mattierungen erforderlichen Mengen häufig gar nicht oder nur unter Verschlechterung der Verarbeitbarkeit einbringen. Die erfindungsgemäßen Aminaddukte sind universell für diese Mattierungsmitteltypen einsetzbar und sorgen für eine ausgezeichnete Dispergierung bei gleichzeitiger Reduzierung der Viskosität der Mattlacke. Eine Erhöhung der Mattierungsmittelmenge ist damit möglich. Dabei wird auch meist die Orientierung der Mattierungsmittel verbessert, die Lacke erscheinen transparenter, das Absetzen des Mattierungsmittels wird vermindert, und das Additiv reduziert die normalerweise auftretende Schaumentwicklung und verbessert den Verlauf.

Die erfindungsgemäßen Aminaddukte eignen sich insbesondere auch zur Herstellung von Feststoffkonzentraten, wie Pigmentkonzentraten. Dazu werden die erfindungsgemäßen Aminaddukte in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den erfindungsgemäßen Aminaddukten ist es aber insbesondere möglich, stabile bindemittelfreie Pigmentkonzentrate herzustellen. Ebenso ist es möglich, mit den erfindungsgemäßen Aminaddukten fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäße Verbindung zugemischt und die so erhaltene Mischung dispergiert. Die auf verschiedenen Wegen hergestellten Feststoffkonzentrate können dann in unterschiedliche Substrate wie z.B. Alkydharze, Polyesterharze, Acrylatharze, Polyurethanharze oder Epoxidharze eingearbeitet werden. Pigmente können aber auch lösemittelfrei direkt in den erfindungsgemäßen Aminaddukten dispergiert werden und eignen sich dann besonders zur Pigmentierung von thermoplastischen und duroplastischen Kunststoffformulierungen.

Je nach Einsatzgebiet werden die erfindungsgemäßen Aminaddukte in solchen Mengen eingesetzt, dass in dem letztlich für die weitere Anwendung interessanten Produkt vorteilhaft ein Anteil des erfindungsgemäßen Netz- und Dispergiermittels von 0,01 bis 10 Gew.-%, bezogen auf die Gesamtmenge des jeweiligen Produkts, besteht. Möglich sind aber auch höhere Anteile.

Bezogen auf den zu dispergierenden Feststoff, beispielsweise das Pigment, wird das erfindungsgemäße Netz- und Dispergiermittel in einer Menge von bevorzugt 0,5 bis 100 Gew.-% eingesetzt. Werden schwer zu dispergierende Feststoffe verwendet, kann die Menge an eingesetztem erfindungsgemäßen Netz- und Dispergiermittel durchaus höher sein. Die Menge an Dispergiermittel ist im Allgemeinen abhängig von der zu belegenden Oberfläche des zu dispergierenden Stoffes. Von Bedeutung kann also beispielsweise sein, um welches Pigment es sich handelt. Allgemein lässt sich sagen, dass zur Dispergierung anorganischer Pigmente meist weniger Dispergiermittel notwendig ist als für organische Pigmente, da letztere meist über eine höhere spezifische Oberfläche verfügen und von daher eine größere Menge an Dispergiermittel nötig ist. Typische Dosierungen des Netz- und Dispergiermittels für anorganische Pigmente liegen beispielsweise bei 1 bis 20 Gew.-%, für organische Pigmente bei 10 bis 50 Gew.-%, jeweils bezogen auf den zu dispergierenden Feststoff, insbesondere das Pigment. Bei sehr feinteiligen Pigmenten (beispielsweise einigen Rußen) sind auch Zugabemengen von 30 bis 90% oder mehr nötig. Als Kriterien für eine ausreichende Pigmentstabilisierung können beispielsweise Glanz und Transparenz der Beschichtungszusammensetzungen oder der Grad des Ausschwimmens herangezogen werden. Die Dispergierung der Feststoffe kann als Einzelanreibung erfolgen oder auch als Gemischtanreibung mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen. In diesen Fällen lässt sich bei Einsatz der erfindungsgemäßen Aminaddukte häufig eine gleichnamige, in der Regel positive, Ladung aller Teilchen erreichen und damit Instabilitäten durch Ladungsunterschiede vermeiden. Ihre optimale Wirkung erzielen die Dispergiermittel bei Zugabe zum Mahlgut, insbesondere, wenn zunächst der zu dispergierende Feststoff nur mit dem Additiv und gegebenenfalls Lösemitteln gemischt wird ("Premix"), da dann das Additiv bevorzugt auf die Feststoffoberfläche adsorbieren kann, ohne in Wettbewerb mit den Bindemittel-Polymeren treten zu müssen. In der Praxis ist diese Vorgehensweise aber nur in Ausnahmefällen nötig. Bei Bedarf können die erfindungsgemäßen Aminaddukte auch nachträglich eingesetzt werden (als sogenannte "Post-Additive"), zum Beispiel um in einem fertig aufgelackten Ansatz Ausschwimm- oder Flockulationsprobleme zu lösen. In der Regel sind in diesem Fall aber erhöhte Additiv-Dosierungen erforderlich.

Die Produkte, insbesondere die Beschichtungszusammensetzungen beziehungsweise Lacke, in denen die erfindungsgemäßen Aminaddukte letztlich ihre Wirkungen entfalten sollen, können zudem ein organisches Polymer als Bindemittel enthalten. Solche Bindemittel sind dem Fachmann bekannt. Dieses mindestens eine Bindemittel kann beispielsweise über ein Auflacksystem eingeführt werden, welches beispielsweise mit einem Pigmentkonzentrat, enthaltend die erfindungsgemäßen Aminaddukte, gemischt wird, so dass es sich bei dem betrachteten Produkt um einen pigmentierten Lack handelt. Möglich sind aber auch andere pigmentierte und/oder füllstoffhaltige Produkte, beispielsweise Kunststoffe, Dichtstoffe und weitere dem Fachmann bekannte Produkte auf Basis einer organischen polymeren Matrix. Als Produkt ist ein System anzusehen, welches ein polymeres Harz beziehungsweise organisches Polymer als Bindemittel enthält und dadurch in der Lage ist, unter geeigneten Härtungsbedingungen eine feste organische, polymere Matrix zu bilden (beispielsweise eine Beschichtungszusammensetzung). Ebenfalls als Produkt wird ein System bezeichnet, dass durch einfache Vermischung mit einer Komponente, welche ein Bindemittel enthält, zur Bildung einer solchen organischen, polymeren Matrix fähig ist (beispielsweise ein Pigmentkonzentrat). Zum Einsatz kommen beispielsweise, aber nicht ausschließlich die dem Fachmann bekannten Alkydharze, Polyesterharze, Acrylatharze, Polyurethanharze, Cellulosenitrate, Celluloseacetobutyrate, Melamine, Chlorkautschuken und/oder Epoxidharze. Beispiele für Beschichtungen auf Wasserbasis sind kathodische oder anodische Elektrotauchlackierungen z.B. für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Möglich sind sowohl 1-Komponentensysteme als auch 2-Komponentensysteme, wobei im letzteren Fall in der Regel noch Polyisocyanate, Melaminharze und/oder Polyamidharze als die typischen, dem Fachmann geläufigen Vernetzungsmittel in einer zweiten Komponente vorhanden sind. Bevorzugt sind Produktsysteme, insbesondere Beschichtungszusammensetzungen, die eine Acrylatharz als Bindemittel enthalten. In einer weiteren Variante handelt es sich um eine 2-Komponenten (2K) Beschichtungszusammensetzung bzw. einen 2K-Lack, der ein Epoxidharz in der Bindemittelkomponente und ein Polyamidharz in der Vernetzerkomponente enthält.

Die als Produkte bevorzugten Beschichtungszusammensetzungen können wasserbasierend oder lösemittelbasierend sein. Unter wasserbasierend ist zu verstehen, dass die Beschichtungszusammensetzung als Lösemittel hauptsächlich Wasser enthält. Insbesondere sind bei einer wasserbasierenden Beschichtungszusammensetzung nicht mehr als 10 Gew.-% organische Lösemittel, bezogen auf die Gesamtmenge an Lösemitteln, in der Beschichtungszusammensetzung enthalten. Als lösemittelbasierend gilt eine Beschichtungszusammensetzung, die nicht mehr als 5 Gew.-%, bevorzugt nicht mehr als 2 Gew.-% Wasser, bezogen auf die Gesamtmenge an Lösemitteln enthält. Lösemittelbasierende Zusammensetzungen sind bevorzugt.

Als weitere Produktkomponenten kommen beispielsweise in Frage Photoinitiatoren, Entschäumer, Netzmittel, filmbildende Hilfsmittel, wie Cellulose-Derivate (beispielsweise Cellulosenitrate, Celluloseacetate, Celluloseacetobutyrat), Reaktivverdünner, Verlaufmittel, Dispergiermittel, und/oder rheologiesteuernde Additive.

Die Herstellung der als Produkte bevorzugten Pigmentkonzentrate und Beschichtungszusammensetzung erfolgt über die dem Fachmann geläufigen Verfahren. Es kommen die bekannten Methoden zum Einsatz, wie beispielsweise die schrittweise Zugabe unter Rühren und Vermischung der Bestandteile der Beschichtungszusammensetzung in üblichen Mischaggregaten, wie Rührkessel oder Dissolver.

Unter Verwendung der bevorzugten Pigmentkonzentrate und Beschichtungszusammensetzungen können Beschichtungen bzw. Lackschichten hergestellt werden. Die Herstellung der Beschichtung erfolgt über die dem Fachmann geläufigen Applikationstechniken auf ein Substrat und anschließende Härtungsverfahren.

Die Applikation erfolgt beispielsweise durch die bekannten Spritz-, Sprüh-, Streich-, Roll-, Giess-, Tränk- und/oder Tauchverfahren. Nach der Applikation der Beschichtungszusammensetzung auf ein Substrat erfolgt die Härtung beziehungsweise Trocknung nach gängigen Methoden. Z.B. kann die applizierte Beschichtungszusammensetzung physikalisch trocknend, thermisch und/oder unter Anwendung aktinischer Strahlung (strahlenhärtend), vorzugsweise UV-Strahlung sowie Elektronenstrahlung härtbar sein. Die thermische Härtung kann beispielsweise im Bereich von etwa 10°C bis etwa 400 °C, je nach Art der Beschichtungszusammensetzung und/oder des Substrats, erfolgen. Auch die Dauer der Härtung ist individuell beispielsweise von der Art des Härtungsverfahrens (thermisch oder aktinisch), der Art der eingesetzten Beschichtungszusammensetzung und/oder den Substraten abhängig. Dabei kann das Substrat bewegt werden oder auch ruhen.

Neben der oben beschriebenen Anwendung als Dispergiermittel und/oder Beschichtungsmittel für pulver- und faserförmige Feststoffe können die erfindungsgemäßen Aminaddukte auch als Viskositätsreduzierer und Kompatibilisatoren in Kunstharzen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in der US-A-4,777,195 beschrieben. Ein Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht mit den verwendeten ungesättigten Polyesterharzen verträglich und es kommt zur Separation der Komponenten. Bei Verwendung von PS-gefüllten SMC- oder BMC-Mischungen können die erfindungsgemäßen Aminaddukte aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Mittels der erfindungsgemäßen Aminaddukte können z.B. in unverträglichen Polyol-Mischungen, Polyol-Isocyanat-Mischungen oder Polyol-Treibmittelmischungen (werden z.B. bei der Polyurethan-Herstellung eingesetzt) Phasenvermittlungseffekte erzielt werden.

### Ausführungsbeispiele:

Im Folgenden wird die Erfindung anhand von Beispielen näher erläutert. Sofern nicht entsprechend anders deklariert, handelt es sich im Falle der nachtstehenden Prozentangaben generell um Gewichtsprozente.

### Messverfahren:

Bei molekular uneinheitlichen Substanzen stellen die angegebenen Molekulargewichte - im Folgenden wie schon in der vorstehenden Beschreibung - Durchschnittswerte des Zahlenmittels dar. Die Molekulargewichte beziehungsweise zahlenmittleren Molekulargewichte (Mₙ) werden bei Vorhandensein bestimmbarer funktioneller Endgruppen wie Hydroxy-, Amino- oder Säuregruppen durch Endgruppenbestimmung über die Ermittlung von OH-Zahl, Aminzahl bzw. Säurezahl durch Titration ermittelt. Bei Verbindungen auf die eine Endgruppenbestimmung nicht anwendbar ist, wird das zahlenmittlere Molekulargewicht mittels Gelpermeationschromatographie gegen einen Polystyrolstandard (nach DIN 55672) bestimmt.

### Festkörper

Die Probe (2,0 ± 0,1 g Prüfsubstanz) wird in eine vorher getrocknete Aluminiumschale eingewogen und 10 Minuten bei 150 °C im Trockenschrank getrocknet, im Exsikkator abgekühlt, und dann zurückgewogen. Der Rückstand entspricht dem Festkörperanteil.

### OH-Zahl

Alkoholische Hydroxygruppen werden durch Acetylierung mit einem Überschuss Essigsäureanhydrid umgesetzt. Anschließend wird das überschüssige Essigsäureanhydrid durch Wasserzugabe zur Essigsäure aufgespalten und mit ethanolischer KOH zurücktitriert. Die OH-Zahl gibt die Menge KOH in mg an, die der bei der Acetylierung von 1g Substanz gebundenen Menge Essigsäure äquivalent ist.

### Säurezahl

Unter der Säurezahl (SZ) wird die Menge KOH in mg verstanden, die zur Neutralisation von 1g Substanz unter den festgelegten Bedingungen erforderlich ist. Die Säurezahl wird nach DIN EN ISO 2114 durch eine Neutralisationsreaktion mit 0,1 n KOH in Ethanol als Titrationsmittel bestimmt:

### Aminzahl

Unter der Aminzahl (AZ) wird die Menge KOH in mg verstanden, die dem Aminanteil von 1g Substanz entspricht. Die Aminzahl wird nach DIN 16945 durch eine Neutralisationsreaktion mit 0,1 n Perchlorsäure in Essigsäure als Titrationsmittel bestimmt.

### Gelpermeationschromatoqraphie (GPC)

Die Gelpermeationschromatographie wurde bei 40 °C mit einer Hochdruckflüssigkeitschromatographie-Pumpe (Bischoff HPLC 2200) und einem Brechungsindexdetektor (Waters 419) durchgeführt. Als Elutionsmittel wurde Tetrahydrofuran mit einer Elutionsgeschwindigkeit von 1 ml/min verwendet. Die Kalibrierung wurde mittels Polystyrol-Standards durchgeführt. Das zahlenmittlere Molekulargewicht (Mₙ), das gewichtsmittlere Molekulargewicht (M_{w}) und der Polymolekularitätsindex PMI = M_{w}/Mₙ wurden mit dem Programm NTeqGPC (nach DIN 55672) berechnet.

### NMR-Messung

Die NMR-Messungen wurden auf einem Bruker DPX 300 bei 300 MHz (¹H) durchgeführt. Als Lösungsmittel wurde deuteriertes Chloroform (CDCl₃) verwendet.

Im Folgenden wird die Erfindung anhand von Beispielen veranschaulicht. Sofern nicht anders ausgeführt handelt es sich bei Angaben in Prozent um Gewichtsprozente.

### Herstellvorschriften:

### Erfindungsgemäße Beispiele

### Allgemeine Herstellvorschrift für Zwischenprodukte AC

In einem mit Rührer, Thermometer und Stickstoffeinleitungsrohr versehenen Vierhalskolben wird die angegebene Menge Amin A vorgelegt. Mit Wasserbadkühlung wird unter Rühren die angegebene Menge der Komponente C so zudosiert, dass die Temperatur 100 °C nicht übersteigt. Die Vollständigkeit der Umsetzung eines Epoxides wurde via ¹H-NMR kontrolliert.

| **Bsp.** | **Komponente A** | **Gew.-%** | **Komponente C** | **Gew.-%** |
|---|---|---|---|---|
| AC1 | PEI 1300 | 60,15 | EHGE | 39,84 |
| AC2 | PEI 1300 | 61,07 | CGE | 38,92 |
| AC3 | PEI 1300 | 56,73 | NOM | 43,26 |
| AC4 | PEI 1300 | 91,15 | TMPO | 8,84 |
| AC5 | PEI 1300 | 82,82 | 3EO-TMPOx | 17,18 |
| AC6 | PEI 1300 | 86,6 | GC | 13,38 |
| AC7 | PEI 300 | 70,98 | EHGE | 29,03 |
| AC8 | PEI 2000 | 59,86 | EHGE | 40,14 |
| AC9 | PEI 1300 | 86,54 | EHGE | 13,45 |
| AC10 | PEI 1300 | 83,28 | NOM | 16,71 |
| AC11 | PEI 1300 | 87,68 | CGE | 12,31 |
| AC12 | PEI 2000 | 61,86 | AlkylGE | 38,14 |
| Bsp.= Beispiel, PEI (Zahl)= Polyethylenimin (MG), EHGE= Ethylhexylglycidylether, CGE=o-Cresylglycidylether, NOM=Neodecansäureoxiranylmethylester, TMPOx= 3-Ethyl-3-(hydroxymethyl)oxetan , 3EO-TMPOx= ethoxyliert, 3-Ethyl-3-(polytri(oxyethylen)hydroxymethyl)oxetan = 3EO-TMPOx, GC= Glycerincarbonat, AlkylGE=C12-C14-Alkylglycidylether | | | | |

### Allgemeine Herstellvorschrift für Produkte ACB

In einem mit Rührer, Thermometer und Stickstoffeinleitungsrohr versehenen Vierhalskolben wird die angegebene Menge der Komponente AC in der N₂-Atmosphäre vorgelegt. Die Reaktionsmischung wird auf 80 °C erwärmt und mit dem ca. 1/3 der angegebenen Menge der Komponente **B1** umgesetzt. Die Temperatur soll dabei 80 °C nicht übersteigen. Nach ca. einer Stunde wird die restliche Menge der Komponente **B1,** des Katalysators und gegebenenfalls die angegebene Menge **B2** zudosiert und die Temperatur auf 170°C erhöht. Die Reaktionskontrolle erfolgt via Festkörperbestimmung. Die Reaktion gilt als beendet, wenn ein Festkörpergehalt > 97 % ist.

| **Bsp.** | **Komponente AC** | **Gew.-%** | **Komponente B1** | **Gew.-%** | **Komponente B2** | **Gew.-%** | **Katalysator** | **Gew.-%** |
|---|---|---|---|---|---|---|---|---|
| ACB1 | AC1 | 8,72 | CAPA | 63,42 | VAL | 27,81 | DBTL | 0,006 |
| ACB2 | AC1 | 22,8 | CAPA | 77,19 | | | DBTL | 0,006 |
| ACB3 | AC1 | 12,87 | CAPA | 87,12 | | | DBTL | 0,006 |
| ACB4 | AC1 | 8,14 | CAPA | 91,85 | | | DBTL | 0,006 |
| ACB5 | AC2 | 8,35 | CAPA | 75,82 | VAL | 15,25 | DBTL | 0,008 |
| ACB6 | AC7 | 8,20 | CAPA | 78,09 | VAL | 13,70 | DBTL | 0,005 |
| ACB7 | AC3 | 9,45 | CAPA | 77,04 | VAL | 13,52 | DBTL | 0,005 |
| ACB8 | AC6 | 5,53 | CAPA | 86,85 | VAL | 7,8 | DBTL | 0,007 |
| ACB9 | AC4 | 4,93 | CAPA | 80,86 | VAL | 14,19 | DBTL | 0,007 |
| ACB10 | AC5 | 5,42 | CAPA | 80,46 | VAL | 14,12 | DBTL | 0,007 |
| ACB11 | AC2 | 3,21 | CAPA | 61,06 | VAL | 35,70 | DBTL | 0,005 |
| ACB12 | AC2 | 4,41 | CAPA | 83,39 | VAL | 12,19 | DBTL | 0,005 |
| ACB13 | AC12 | 8,81 | CAPA | 91,18 | | | DBTL | 0,005 |
| ACB14 | AC8 | 7,1 | CAPA | 70,50 | VAL | 22,39 | DBTL | 0,004 |
| ACB15 | AC10 | 5,5 | CAPA | 94,5 | | | DBTL | 0,005 |
| ACB16 | AC9 | 8,5 | CAPA | 62,4 | VAL | 28,9 | DBTL | 0,004 |
| ACB17 | AC11 | 5,4 | CAPA | 94,6 | | | DBTL | 0,004 |
| ACB18 | AC1 | 7,5 | HSS | 92,5 | | | DBTL | 0,004 |
| ACB19 | AC1 | 9,5 | RFS | 90,5 | | | DBTL | 0,004 |
| Bsp.= Beispiel, CAPA=epsilon-Caprolacton, VAL=delta-Valerolacton, DBTL=Dibutylzinndilaurat, HSS = Hydroxystearinsäure, RFS = Ricinolfettsäure | | | | | | | | |

### Allgemeine Herstellvorschrift für modifizierte Folgeprodukte ACB@mod

In einem mit Wasserabscheider, Rührer, Thermometer und Stickstoffeinleitungsrohr versehenen Vierhalskolben wird die angegebene Menge der Komponenten **AC**, **B1** und gegebenen falls **B2** in der N₂-Atmosphäre vorgelegt. Die Reaktionsmischung wird auf 80 °C erwärmt und der Katalysator zugesetzt. Nach ca. zwei Stunden wird die Temperatur auf 190 °C erhöht. Die Reaktionskontrolle erfolgt via Festkörperbestimmung. Die Reaktion gilt als beendet wenn Festkörpergehalt > 97 % ist. Anschließend erfolgt die Umsetzung mit der Komponente S1 bei 150°C. Die Vollständigkeit der Umsetzung wird mittels ¹H-NMR und durch Ermittlung der Säurezahl kontrolliert.

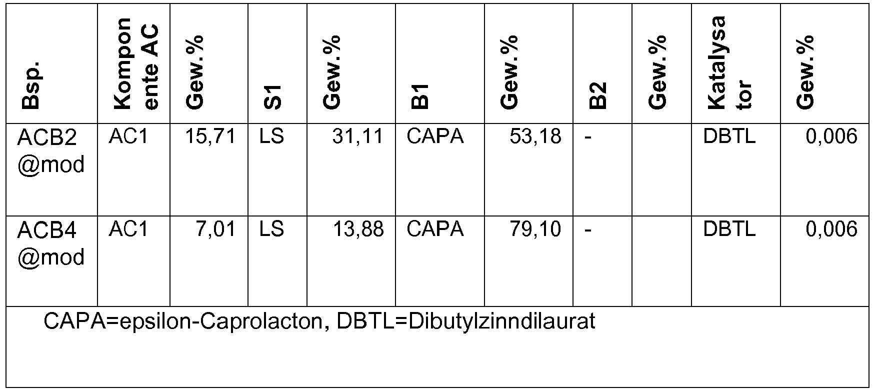

### Nicht erfindungsgemäße Beispiele nach dem Stand der Technik.

### Allgemeine Herstellvorschrift für Produkte ACY

In einem mit Rührer, Thermometer, Wasserabscheider und Stickstoffeinleitungsrohr versehenen Vierhalskolben wird die angegebene Menge der Komponente AC und der Polyesterkomponente Y in der N₂ Atmosphäre vorgelegt. Die Reaktionsmischung wird auf 80 °C erwärmt und mit der angegebenen Menge Katalysator umgesetzt. Nach ca. einer Stunde wird die Temperatur auf 170 °C erhöht. Wenn kein Reaktionswasser mehr frei wird, ist die Reaktion abgeschlossen.

| **Bsp.** | **Komponente AC** | **Gew.-%** | **Polyester - komp. Y** | **Gew.-%** | **Katalysator** | **Gew.-%** |
|---|---|---|---|---|---|---|
| ACY1 | AC1 | 15,71 | Y1 | 84,28 | DBTL | 0,006 |
| ACY2 | AC1 | 10,26 | Y2 | 89,73 | DBTL | 0,006 |
| ACY3 | AC1 | 7,01 | Y3 | 92,98 | DBTL | 0,006 |
| ACY4 | AC12 | 7,87 | Y4 | 92,08 | ZB | 0,05 |
| Bsp.= Beispiel, DBTL=Dibutylzinndilaurat, ZB = Zirconiumbutylat | | | | | | |

### Allgemeine Herstellvorschrift für Polyesterkomponenten Y

In einem mit Rührer, Thermometer, Rückflusskühler und Stickstoffeinleitungsrohr versehenen Vierhalskolben werden die Stoffe **S1** bis **B2** vorgelegt und unter Rühren in der N₂-Atmosphäre auf 110°C aufgeheizt. Dann wird der Katalysator zugegeben und weiter unter N₂-Gas auf 190°C aufgeheizt. Bei dieser Temperatur wird gerührt bis der FK >= 99% erreicht ist.

| **Bsp.** | **S1** | **Gew.-%** | **B1** | **Gew.-%** | **B2** | **Gew.-%** | **Katalysator** | **Gew.-%** | **M g/mol** |
|---|---|---|---|---|---|---|---|---|---|
| Y1 | LS | 31,08 | CAPA | 53,13 | VAL | - | ZB | 0,07 | 542 |
| Y2 | LS | 20,29 | CAPA | 69,38 | VAL | - | ZB | 0,08 | 884 |
| Y3 | LS | 13,87 | CAPA | 79,03 | VAL | - | ZB | 0,08 | 1340 |
| Y4 | HSS | 12,01 | CAPA | 87,98 | VAL | - | ZB | 0,1 | 2412 |
| Bsp. = Beispiel; Kat = Katalysator; LS = Laurinsäure; HSS = Hydroxystearinsäure, RFS = Ricinolfettsäure; CAPA = epsilon-Caprolacton; | | | | | | | | | |
| VAL = delta-Valerolacton; ZB = Zirconiumbutylat; IPT = Isopropyltitanat; | | | | | | | | | |

### Anwendungsbeispiele

In den nachfolgenden Anwendungsbeispielen wurde die Anwendung der erfindungsgemäß zum Einsatz kommenden Dispergiermittel im Vergleich zu nicht erfindungsgemäß (mit (*) markiert) verwendbaren Dispergiermittel als Additive in Pigmentpasten bzw. in entsprechenden Holzlacksystemen getestet. Dabei wurden die Beispiele ACY2* vs. ACB3, ACY3* vs. ACB4 und ACB4@mod, ACB13 vs. ACY4* miteinander verglichen.

### Anwendung der erfindungsgemäßen Polymere als Netz- & Dispergieradditive

Anwendungstechnische Prüfung der Stabilisierung von Pigmenten in
Holzlacksystemen
Arbeitsgeräte:
DISPERMAT CV, DISPERMAT LC3
Andalok-Shaker Type Nathalie,

### Stoffe für anwendungstechnische Prüfung:

Setal 209 (Anreibebindemittel), Kurzölalkyd, Nuplex resins
Synthalat 405 E (Auflackbindemittel), Kurzölalkyd, Synthopol
Desmophen 1300 (Auflackbindemittel), Polyesterpolyol, Covestro
Desmodur HL, aromatisch-aliphatisches Isocyanat, Covestro
Bayferrox 3910, Eisenoxidgelb, P.Y. 42, Lanxess
Heliogen Blau L7101F, Phthalocyanin Blau, P.B. 15:4, BASF
Spezialschwarz 4, furnance black, P.BI. 7, Orion engineered Carbons

### Arbeitsweise:

Zur Herstellung der Pigmentkonzentrate wurden jeweils die angegebenen Rohstoffe, Additive und das Pigment nacheinander in einen Dispermatentopf (300 ml Volumen mit 4,5 cm Teflonscheiben) eingewogen. Anschließend wurden Glasperlen 1:1 in Gewichtsanteilen zugegeben und die Mischung für 60 min bei einer Umfangsgeschwindigkeit von 21m/s (4,5 cm Teflonscheibe) mit einem DISPERMAT CV dispergiert, wobei die Kühlung wird auf 40°C eingestellt wurde.

**Formulierung 1: Pigmentkonzentrate auf Basis von Heliogen Blue L7101F**

| | Heliogen Blue L7101F | | |
|---|---|---|---|
| Pigmentname | Control | Additiv (60%) | Additiv (100%) |
| Setal 209 SS70 | 42,8 | 38 | 38 |
| Butylacetate | 40,7 | 37,5 | 40,7 |
| Additive | 0 | 8 | 4,8 |
| BYK-Synergist 2100 | 0,5 | 0,5 | 0,5 |
| Pigment | 16 | 16 | 16 |
| Total | 100 | 100 | 100 |
| Additive s.o.p. (%) | | 30 | 30 |

**Formulierung 2: Pigmentkonzentrate auf Basis von Bayferrox 3910**

| | Bayferrox 3910 | | |
|---|---|---|---|
| | Control | Additiv (60%) | Additiv (100%) |
| Setal 209 SS70 | 26,4 | 22,4 | 22,4 |
| Butylacetate | 33,2 | 30,5 | 33,2 |
| Aerosil R-972 | 0,4 | 0,4 | 0,4 |
| Additive | | 6,7 | 4 |
| Pigment | 40 | 40 | 40 |
| Total | 100 | 100 | 100 |
| Additive s.o.p. (%) | | 10 | 10 |

**Formulierung 3: Pigmentkonzentrate auf Basis von Spezialschwarz 4**

| | Special Black 4 | | |
|---|---|---|---|
| | Control | Additiv (60%) | Additiv (100%) |
| Setal 209 SS70 | 40,9 | 32,3 | 32,3 |
| Butylacetate | 41,1 | 35,3 | 41,1 |
| Additive | | 14,3 | 8,6 |
| Pigment | 18 | 18 | 18 |
| Total | 100,0 | 100,0 | 100,0 |
| Additive s.o.p. (%) | | 48 | 48 |

### Auflacken der Pigmentkonzentrate

### Arbeitsweise:

Alle Komponenten wurden nacheinander unter Rühren mit einen PE-Becherglas gegeben und anschließend mit einem Andalok-Shaker (Type Nathalie) für 10 min homogenisiert.

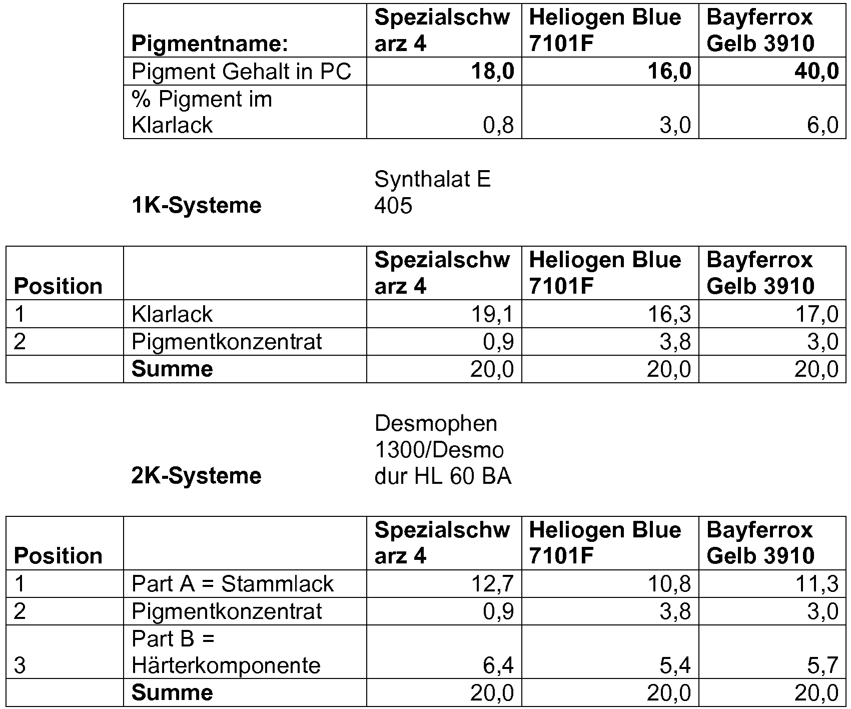

### Formulierung 4: 2K PU Desmophen 1300 BA. 75% in BAC, glänzend

### Arbeitsweise:

Für die Herstellung des Klarlackes wird ein Premix aus Butylacetat, MIBK, MEK und Dowanol PMA vorbereitet. Danach werden NC-Chips (E510 ESO), Desmophen 1300BA, Desmophen 1300BA und BYK-066 nacheinander unter Rühren eingearbeitet und anschließend in 3 min bei 2000 rpm mit einem DISPERMAT LC3 homogenisiert.

| **Rohstoffe** | **Gewicht in %** |
|---|---|
| Butylacetat | 15,7 |
| MIBK (Methylisobutylketon) | 10,7 |
| MEK (Methylethylketon) | 17,2 |
| Dowanol PMA (1-Methoxy-2-propyl acetate) | 12,3 |
| NC-Chips (E510 ESO) | 4 |
| Desmophen 1300BA | 40 |
| Desmophen 1300BA | 0,1 |
| BYK-066N | 0,3 |
| **Summe** | **100** |

**Härterlösung:**

| | |
|---|---|
| Desmodur HL 60 BA | 30 |
| Dowanol PMA | 7 |
| Butylacetat | 13 |
| **Summe** | **50** |

| | |
|---|---|
| Härterlösung 2 : 1 (Stammlack:Härter) | |

### Formulierung 5: 1K NC-System: Synthalat E 405

### Arbeitsweise:

Für die Herstellung des Klarlackes wird ein Premix aus Butylacetat, Ethylacetat und Xylol vorbereitet. Danach werden NC-Chips (E510 ESO), Synthalat E 405 BA, BYK-306 und BYK-052 nacheinander unter Rühren eingearbeitet und anschließend mit einem DISPERMAT LC3 für 3 min bei 2000 rpm homogenisiert.

| **Raw material** | **Gewicht in %** |
|---|---|
| Butylacetat | 23,6 |
| Ethylacetat | 19,6 |
| Xylol | 18,5 |
| NC Chips (E510 ESO) | 12 |
| Synthalat E 405 BA | 26 |
| BYK-306 | 0,1 |
| BYK-052 | 0,2 |
| **Summe** | **100** |

### Verträglichkeitstests:

### Für die Verträglichkeitstests wurde die Mischung in ein 10 ml

Rollrandschnappdeckelglas gefüllt und für 10 min auf dem Rüttler homogenisiert. Die Unverträglichkeit zeigte sich durch eine leichte Trübung.

| Nr. | Rohstoff | FK Additiv | Menge (g) | Menge (g) |
|---|---|---|---|---|
| | | | 100% | 60% |
| 2 | Lack | 90 Teile | 4,5 | 4,2 |
| 3 | Additiv | 10 Teile | 0,5 | 0,8 |
| **Summe** | | | 5,0 | 5,0 |

| Versuchsnummer | Setal 209* | Synthalat 405 E | Desmophen 1300 |
|---|---|---|---|
| ACB3 | 1 | 2 | 2 |
| ACY2* | 1 | 1 | 1 |
| ACY3* | 2 | 1 | 2 |
| ACB4 | 2 | 1 | 2 |
| ACB4@mod | 1 | 1 | 1 |
| ACB13 | 1 | 1 | 1 |
| ACY4* | 1 | 2 | 2 |
| 1=verträglich, 2=leichte Unverträglichkeit | | | |

### Ergebnisse:

Farbstärke +Transparenz: 1-5 (1=gut, 5=schlecht)

| Heliogen Blau L7101F | | | | | | | |
|---|---|---|---|---|---|---|---|
| | Setal 209 | | | Desmorphen 1300 | | Synthalat 405 E | |
| Additiv | Visko (mPas*s) 1Tag Lagerung bei RT, γ = 10 1/s | Visko (mPas*s) 7 Tage Lagerung bei RT, γ = 10 1/s | | Glanz [20°] | Farbstärke/ Transparenz [1-5] | Glanz [20°] | Farbstärke/ Transparenz [1-5] |
| ACY2* | 1400 | | 1600 | 91 | 2 | 83 | 3 |
| ACB3 | 1200 | | 1200 | 93 | 1 | 85 | 1 |
| ACY3* | 1400 | | 1600 | 90 | 3 | 83 | 2 |
| ACB4 | 1200 | | 1400 | 93 | 2 | 85 | 1 |
| ACB4@mod | 900 | | 1200 | 92 | 1 | 84 | 1 |

| Bayferrox 3910 | | | | | | |
|---|---|---|---|---|---|---|
| | Setal 209 | | Desmorphen 1300 | | Synthalat 405 E | |
| | Visko (mPas*s) 1Tag Lagerung bei RT, γ = 10 1/s | Visko (mPas*s) 7 Tage Lagerung bei RT, γ = 10 1/s | Glanz [20°] | Farbstärke/ Transparenz [1-5] | Glanz [20°] | Farbstärke/ Transparenz [1-5] |
| ACY2* | 700 | 1700 | 88 | 3 | 82 | 3 |
| ACB3 | 400 | 500 | 90 | 2 | 84 | 3 |
| ACY3* | 1000 | 700 | 87 | 3 | 82 | 3 |
| ACB4 | 400 | 500 | 90 | 2 | 83 | 3 |
| ACB4@mod | 400 | 300 | 90 | 2 | 83 | 3 |
| ACB13 | 300 | 500 | 88 | 2 | 80 | 1 |
| ACY4* | 700 | 800 | 85 | 2 | 77 | 2 |

| Spezialschwarz 4 | | | | | | |
|---|---|---|---|---|---|---|
| System | Setal 209 | | Desmorphen 1300 | | Synthalat 405 E | |
| Additiv | Visko (mPas*s) 1Tag Lagerung bei RT, γ = 10 1/s | Visko (mPas*s) 7 Tage Lagerung bei RT, γ = 10 1/s | Glanz [20°] | Farbstärke/ Transparen z [1-5] | Glanz [20°] | Farbstärke/ Transparen z [1-5] |
| ACY2* | 400 | 500 | 96 | 1 | 4 | 87 |
| ACB3 | 300 | 400 | 97 | 1 | 2 | 88 |
| ACY3* | 500 | 600 | 96 | 2 | 1 | 87 |
| ACB4 | 400 | 500 | 97 | 1 | 1 | 87 |
| ACB4@m od | 400 | 500 | 97 | 1 | 1 | 87 |

### Fazit der Prüfungen in Holzlacksystemen:

Die besonders gute Qualität der erfindungsgemäßen Polymere zeigte sich bezüglich der niedrigen Viskosität, der Farbstärke, Transparenz und dem guten Glanz.

Ein besonderer Vorteil der Polymere liegt auch in der besonders guten Verträglichkeit in den Bindemittellösungen und demzufolge einfachen Einarbeitung.

### Anwendungstechnische Prüfung der Viskositätsreduktion in UV-Systemen mit Silica Füllstoffen

In den nachfolgenden Anwendungsbeispielen wurde die Anwendung der erfindungsgemäß zum Einsatz kommenden Dispergiermittel im Vergleich zu nicht erfindungsgemäß (mit * markiert) verwendbaren Dispergiermittel als Additive für die Stabilisierung von Silica in entsprechenden Holzlacksystemen getestet. Dabei wurden die Viskositätsmessungen direkt nach der Anreibung und nach Lagerung bei Raumtemperatur und im Ofen bei 50°C gemacht. Die Viskositätsmessungen wurden mit einem Stresstech Rheometer, ATS RheoSystems bei 23°C durchgeführt. Dabei wurde die Messung vier Mal für 1, 10 und 100 1/s wiederholt.

### Testsysteme:

Ebecryl 4381, ungesättigter Polyester, Allnex
Acematt HK 440, unbehandeltes Silica, Acematt

### Arbeitsgeräte:

Stresstech Rheometer, ATS RheoSystems
Micro-TRIgloss (BYK-Gardner)

### Arbeitsweise:

Für die Herstellung des Lackes wird ein Premix aus Bindemittel, DPGDA (Dipropylenglycoldiacrylat), Photoinitiator (Photoinitiator) vorbereitet. Danach werden das Additive und Silica nacheinander unter Rühren (Stufe 1, Pendraulik) eingearbeitet und anschließend für 10 min mit Pendraulik, Stufe 4 (3730 U/min) angerieben. Dabei wurden folgende Dosierungen gewählt:
5% festes Additiv auf Pigment Acematt HK 440
Pigment / Bindemittel-Verhältnis Ebecryl 4381 = 1 : 2,6.

**Formulierung 5: Ebecryl 4381**

| **Ebecryl 4381** | | |
|---|---|---|
| Reihenfolge | Rohstoff | Menge (g) |
| 1 | Bindemittel (Ebecryl 4381) | 38,70 |
| 2 | DPGDA | 39,55 |
| 3 | Darocure 1173 | 5,5 |
| 4 | Additiv | 1,25 |
| 5 | Acematt HK 440 | 15 |
| **Summe** | | 100,00 |

**Ergebnisse:**

| | Acematt HK 440 in Ebecryl 4381 | | | | | | | | |
|---|---|---|---|---|---|---|---|---|---|
| | Visko (Pas*s) 1Tag Lagerung bei RT | | | Visko (Pas*s) 7 Tage Lagerung bei RT | | | Visko (Pas*s) 7 Tage Lagerung bei 50°C | | |
| Additiv | γ = 1 1/s | γ = 10 1/s | γ = 100 1/s | γ = 1 1/s | γ = 10 1/s | γ = 100 1/s | γ = 1 1/s | γ = 10 1/s | γ = 100 1/s |
| ACY2* | 11 | 3 | 2 | 29 | 4 | 2 | 40 | 4 | 2 |
| ACB3 | 7 | 3 | 1 | 21 | 3 | 2 | 32 | 6 | 1 |
| ACY3* | 11 | 4 | 2 | 33 | 3 | 2 | 44 | 3 | 2 |
| ACB4 | 9 | 3 | 1 | 22 | 3 | 2 | 40 | 7 | 2 |
| ACB13 | 15 | 3 | 1 | 19 | 4 | 1 | 40 | 4 | 1 |
| ACY4* | 18 | 4 | 2 | 20 | 5 | 3 | 45 | 6 | 2 |

Die Bestimmung der Glanzwerte erfolgte nach der Applikation auf schwarzen 20 x 10 cm großen Plexiglasplatten. Der Aufzug wurde mit einem 25 µm Spiralrakel gemacht.

| **Ebecryl 4381** | |
|---|---|
| Acematt HK 440 | |
| Additive | Glanz [85°] |
| ACY2* | 55 |
| ACB3 | 61 |
| ACY3* | 57 |
| ACB4 | 61 |
| ACB13 | 60 |
| ACY4* | 57 |

### Überprüfung der Aufnahme von Mattierungsmitteln in Lacken

### Arbeitsweise:

1. Herstellung des Base Coats (siehe Formulierung)
2. Zugabe des Netz- & Dispergieradditivs
3. Einstreuen des Mattierungsmittels bis zu dem Punkt, an dem der Lack nicht mehr rührfähig war, aufgrund eines starken Viskositätsanstiegs.

**Formulierung: Base Coat**

| Base Coat | | |
|---|---|---|
| Ebecryl 4381 | 38,70 | Zugabe: einzeln unter Rühren für 5min bei 2000 rpm |
| BYK-350 | 0,20 | |
| BYK-088 | 0,40 | |
| BYK-306 | 0,20 | |
| Irgacure 1173 | 5,50 | |
| DPGDA | 55,00 | |
| Total | 100,0 | |

**Ergebnisse:**

| **Additiv** | **Zugabe in %** |
|---|---|
| ACY2* | 18 |
| ACY3* | 18 |
| ACY4* | 17 |
| ACB3 | 21 |
| ACB4 | 22 |
| ABC13 | 21 |

### Fazit der Viskositätsprüfung in UV-Systemen

Die besonders gute Qualität der erfindungsgemäßen Polymere zeigt sich bezüglich der niedrigen Viskosität und einem hohen Mattierungsgrad. Mit den erfindungsgemäßen Polymeren kann eine gute Viskositätsreduktion bei hoch gefüllten Systemen erreicht werden. Durch den Zusatz von erfindungsgemäßen Polymeren wird die maximale Zugabemenge an Mattierungsmittel erreicht.

## Patentansprüche

1. Verfahren zur Herstellung eines Aminaddukts, in welchem in einem 1. Schritt ein Polyamin (A) mit einem als Epoxid, als Oxetan oder als zyklisches Carbonat vorliegenden Monomer (C) zu einem (Zwischen)Produkt (AC) umgesetzt wird, welches in einem nachfolgenden 2. Schritt mit einem in Form eines Lactons, einer azyklischen Hydroxcarbonsäure oder eines hydroxyfunktionellen azyklischen Esters vorliegenden Monomer (B) zu einem (Folge)Produkt (ACB) umgesetzt wird, wobei
das Polyamin (A) jeweils mindestens drei aus primären und sekundären Aminogruppen ausgewählte Aminogruppen (A+) aufweist, die jeweils mit den Monomeren (C) und (B) reaktionsfähig sind,
das Monomer (C) keine Estergruppen, keine Carboxylgruppen, sowie keine primären oder sekundären Aminogruppen enthält und im 1. Schritt unter Ringöffnung sowie Entstehung einer Hydroxylgruppe (H+) mit einer der Aminogruppen (A+) des Polyamins (A) unter zusätzlicher Ausbildung entweder einer Kohlenstoff-Stickstoffbindung oder einer Urethanbindung reagiert,
das Monomer (B) keine primären oder sekundären Aminogruppen enthält, ein Molekulargewicht von 90 - 300 g/mol aufweist und im 2. Schritt in der Weise reagiert, dass gegebenenfalls im 1. Schritt nicht umgesetzte Aminogruppen (A+) zu Amidgruppen sowie im 1. Schritt entstandene Hydroxylgruppen (H+) zu Estergruppen umgesetzt werden, wobei das Monomer (B) so ausgewählt ist, dass entweder bei dessen Umsetzung zusätzlich eine terminale Hydroxylgruppe (H++) entsteht oder dass das Monomer (B) selbst bereits über eine terminale Hydroxylgruppe (H++) verfügt und dass über die terminalen Hydroxylgruppen (H++) unter Entstehung von (Poly)Estergruppen eine weitere Anlagerung des Monomers (B) erfolgt,
wobei die Verfahrensparameter so gewählt werden, dass im 1. Schritt und im 2. Schritt insgesamt mindestens 50 Mol.-% der Aminogruppen (A+) umgesetzt werden.

2. Verfahren nach Anspruch 1, **dadurch gekennzeichnet, dass** Monomer (C) als Epoxid vorliegt, so dass das Monomer (C) im 1. Schritt unter Ringöffnung sowie Entstehung einer Hydroxylgruppe (H+) mit einer der Aminogruppen (A+) des Polyamins (A) unter zusätzlicher Ausbildung einer Kohlenstoff-Stickstoffbindung reagiert.

3. Verfahren nach Anspruch 1 oder 2, **dadurch gekennzeichnet, dass** das Monomer (C) ausschließlich die Elemente Kohlenstoff, Wasserstoff sowie Sauerstoff aufweist und keine Hydroxylgruppen enthält.

4. Verfahren nach einem der Ansprüche 1 bis 3, **dadurch gekennzeichnet, dass** das Monomer (C) maximal drei Sauerstoffatome, bevorzugt genau ein Sauerstoffatom und 6 bis 70, bevorzugt 6 bis 32 Kohlenstoffatome, aufweist.

5. Verfahren nach einem der Ansprüche 1 bis 4, **dadurch gekennzeichnet, dass** das Monomer (B) in Form eines Lactons vorliegt, welches bevorzugt vorliegt als Caprolacton, Valerolacton und/ oder Butyrolacton.

6. Verfahren nach einem der Ansprüche 1 bis 5, **dadurch gekennzeichnet, dass** das Polyamin (A) im Verhältnis zum Monomer (C) in einem Gewichtsverhältnis von 1 : 0,1 bis 1 : 100 eingesetzt wird.

7. Verfahren nach einem der Ansprüche 1 bis 6, **dadurch gekennzeichnet, dass** so vorgegangen wird, insbesondere Monomer (B) zu Monomer (C) in einem solchen molaren Verhältnis zueinander eingesetzt werden, dass nach Beendigung des 2. Schritts maximal 5 %, bevorzugt maximal 1 %, der im (Folge)Produkt (ACB) enthaltenen Hydroxylgruppen als im 1. Schritt entstandene Hydroxylgruppen (H+) vorliegen.

8. Verfahren nach einem der Ansprüche 1 bis 7, **dadurch gekennzeichnet, dass** das Monomer (B) im Verhältnis zum Monomer (C) in einem Molverhältnis von 500 : 1 bis 1 : 1 eingesetzt wird.

9. Verfahren nach einem der Ansprüche 1 bis 8, **dadurch gekennzeichnet, dass** die Verfahrensparameter so gewählt werden, dass mindestens 50 Mol.-% der Aminogruppen (A+) bereits durch Schritt 1 umgesetzt werden und durch Schritt 1 und Schritt 2 insgesamt mindestens 70 Mol.-% der Aminogruppen (A+) umgesetzt werden.

10. Verfahren nach einem der Ansprüche 1 bis 9, **dadurch gekennzeichnet, dass** überwiegend oder ausschließlich nur die Reaktionskomponenten Polyamin (A), Monomer (C) und Monomer (B) eingesetzt werden, so dass das (Folge)Produkt (ACB) bezogen auf die eigene Masse insgesamt mindestens 80 Gew.-%, bevorzugt mindestens 95 Gew.-% Strukturelemente aus der Gruppe umgesetztes Polyamin (A), umgesetztes Monomer (C) und umgesetztes Monomer (B), enthält.

11. Verfahren nach einem der Ansprüche 1 bis 10, **dadurch gekennzeichnet, dass** der 1. Schritt und der 2. Schritt jeweils bei Temperaturen unterhalb von 175 °C durchgeführt werden.

12. Verfahren nach einem der Ansprüche 1 bis 11, **dadurch gekennzeichnet, dass** das nach den Schritten 1 und 2 erhaltene (Folge)Produkt (ACB) mit aliphatischen, zykloaliphatischen und/oder aromatischen Monocarbonsäuren, die jeweils 1 ― 30 Kohlenstoffatome enthalten, so umgesetzt wird, dass ein durch Salzbildung und/oder Esterbildung modifiziertes (Folge)produkt (ACB) entsteht.

13. Verfahren nach einem der Ansprüche 1 bis 12, **dadurch gekennzeichnet, dass** das nach den Schritten 1 und 2 erhaltene (Folge)Produkt (ACB) durch Neutralisation mit einer oder mehreren organischen oder anorganischen Säuren oder durch Quaternisierung modifiziert wird.

14. Aminaddukt, herstellbar gemäß dem Verfahren nach einem der Ansprüche 1 bis 13.

15. Verwendung eines Aminaddukts, herstellbar gemäß dem Verfahren nach einem der Ansprüche 1 bis 13 oder gemäß Anspruch 14, als Additiv, bevorzugt in Beschichtungen, insbesondere Lacken, in Kunststoffen, in Pigmentpasten, in Dichtstoffen, in Kosmetika, in Keramik, in Klebstoffen, in Vergussmassen, in pigmenthaltigen Massen der Flachbildschirmtechnologie, in Spachtelmassen, in Druckfarben und in Tinten, bevorzugt in Lacken.

16. Lack und/oder Kunststoff enthaltend ein Aminaddukt gemäß Anspruch 14.

## Claims

1. Process for preparing an amine adduct, wherein in a 1^{st} step a polyamine (A) is reacted with a monomer (C), in the form of an epoxide, an oxetane or a cyclic carbonate, to form an (intermediate) product (AC) which, in a subsequent 2^{nd} step, is reacted with a monomer (B), in the form of a lactone, an acyclic hydroxycarboxylic acid or a hydroxy-functional acyclic ester, to form a (downstream) product (ACB), wherein
the polyamine (A) has in each case at least three amino groups (A+) which are selected from primary and secondary amino groups and which in each case are reactive with the monomers (C) and (B),
the monomer (C) contains no ester groups, no carboxyl groups, and no primary or secondary amino groups, and in the 1^{st} step reacts with ring opening and also formation of a hydroxyl group (H+) with one of the amino groups (A+) of the polyamine (A), with additional formation of either a carbon-nitrogen bond or a urethane bond,
the monomer (B) contains no primary or secondary amino groups, has a molecular weight of 90 - 300 g/mol, and reacts in the 2^{nd} step in such a way that any amino groups (A+) unreacted in the 1^{st} step are converted into amide groups, and hydroxyl groups (H+) formed in the 1^{st} step are converted into ester groups, wherein the monomer (B) is selected such that either reaction thereof is accompanied by additional formation of a terminal hydroxyl group (H++) or that the monomer (B) itself already possesses a terminal hydroxyl group (H++) and that via the terminal hydroxyl groups (H++), with formation of (poly)ester groups, there is further adduction of the monomer (B),
wherein the process parameters are selected such that in the 1^{st} step and in the 2^{nd} step a total of at least 50 mol% of the amino groups (A+) are converted.

2. Process according to Claim 1, **characterized in that** monomer (C) is in the form of an epoxide, and so in the 1^{st} step the monomer (C), with ring opening and with formation of a hydroxyl group (H+), reacts with one of the amino groups (A+) of the polyamine (A), with additional formation of a carbon-nitrogen bond.

3. Process according to Claim 1 or 2, **characterized in that** the monomer (C) has exclusively the elements carbon, hydrogen, and oxygen, and contains no hydroxyl groups.

4. Process according to any of Claims 1 to 3, **characterized in that** the monomer (C) has a maximum of three oxygen atoms, preferably precisely one oxygen atom and 6 to 70, preferably 6 to 32, carbon atoms.

5. Process according to any of Claims 1 to 4, **characterized in that** the monomer (B) is in the form of a lactone which is preferably in the form of caprolactone, valerolactone and/or butyrolactone.

6. Process according to any of Claims 1 to 5, **characterized in that** the polyamine (A) is used in relation to the monomer (C) in a weight ratio of 1:0.1 to 1:100.

7. Process according to any of Claims 1 to 6, **characterized in that** the procedure is such that in particular monomer (B) is used relative to monomer (C) in a molar ratio to one another such that after the end of the 2^{nd} step a maximum of 5%, preferably a maximum of 1%, of the hydroxyl groups present in the (downstream) product (ACB) are in the form of hydroxyl groups (H+) formed in the 1^{st} step.

8. Process according to any of Claims 1 to 7, **characterized in that** the monomer (B) is used in relation to the monomer (C) in a molar ratio of 500:1 to 1:1.

9. Process according to any of Claims 1 to 8, **characterized in that** the process parameters are selected such that at least 50 mol% of the amino groups (A+) are already converted by step 1 and a total of at least 70 mol% of the amino groups (A+) are converted by step 1 and step 2.

10. Process according to any of Claims 1 to 9, **characterized in that** predominantly or exclusively the only reaction components used are polyamine (A), monomer (C), and monomer (B), so that the (downstream) product (ACB), based on its own mass, contains a total of at least 80 wt%, preferably at least 95 wt%, of structural elements from the group of reacted polyamine (A), reacted monomer (C) and reacted monomer (B).

11. Process according to any of Claims 1 to 10, **characterized in that** the 1^{st} step and the 2^{nd} step are carried out in each case at temperatures below 175°C.

12. Process according to any of Claims 1 to 11, **characterized in that** the (downstream) product (ACB) obtained after steps 1 and 2 is reacted with aliphatic, cycloaliphatic and/or aromatic monocarboxylic acids each containing 1-30 carbon atoms in such a way as to form a (downstream) product (ACB) modified by salt formation and/or ester formation.

13. Process according to any of Claims 1 to 12, **characterized in that** the (downstream) product (ACB) obtained after steps 1 and 2 is modified by neutralization with one or more organic or inorganic acids or by quaternization.

14. Amine adduct preparable by the process according to any of Claims 1 to 13.

15. Use of an amine adduct preparable by the process according to any of Claims 1 to 13, or according to Claim 14, as an additive, preferably in coatings, especially paints, in plastics, in pigment pastes, in sealants, in cosmetics, in ceramics, in adhesives, in encapsulants, in pigment-containing compositions of flatscreen technology, in filling compounds, in printing inks and in liquid inks, preferably in paints.

16. Paint and/or plastic comprising an amine adduct according to Claim 14.

## Revendications

1. Procédé pour la préparation d'un produit d'addition d'amine, dans lequel, dans une 1ère étape, une polyamine (A) est transformée avec un monomère (C) se trouvant sous forme d'époxyde, d'oxétane ou de carbonate cyclique en un produit (intermédiaire) (AC), qui est transformé, dans une 2ème étape consécutive, avec un monomère (B) se trouvant sous forme d'une lactone, d'un acide hydroxycarboxylique acyclique ou d'un ester acyclique à fonctionnalité hydroxy en un produit (consécutif) (ACB),
- la polyamine (A) présentant à chaque fois au moins trois groupes amino (A+) choisis parmi les groupes amino primaire et secondaire, qui sont à chaque fois aptes à une réaction avec les monomères (C) et (B),
- le monomère (C) ne contenant pas de groupes ester, pas de groupes carboxyle ni de groupes amino primaire ou secondaire et réagissant dans la 1ère étape avec ouverture de cycle et formation d'un groupe hydroxyle (H+) avec un des groupes amino (A+) de la polyamine (A) avec formation supplémentaire soit d'une liaison carbone-azote, soit d'une liaison uréthane,
- le monomère (B) ne contenant pas de groupes amino primaire ou secondaire, présentant un poids moléculaire de 90-300 g/mole et réagissant dans la 2ème étape de manière telle que des groupes amino (A+) le cas échéant non transformés dans la 1ère étape sont transformés en groupe amide et les groupes hydroxyle (H+) formés dans la 1ère étape sont transformés en groupe ester, le monomère (B) étant choisi soit de manière telle qu'il se forme lors de sa transformation en plus un groupe hydroxyle terminal (H++), soit de manière telle que le monomère (B) dispose déjà lui-même d'un groupe hydroxyle terminal (H++) et de manière telle qu'une addition supplémentaire du monomère (B) a lieu via les groupes hydroxyle terminaux (H++) avec formation de groupes (poly)ester,
les paramètres de procédé étant choisis de manière telle qu'au total au moins 50% en mole des groupes amino (A+) sont transformés dans la 1ère et dans la 2ème étape.

2. Procédé selon la revendication 1, **caractérisé en ce que** le monomère (C) se trouve sous forme d'époxyde, de telle sorte que le monomère (C) réagit dans la 1ère étape avec ouverture de cycle et formation d'un groupe hydroxyle (H+) avec un des groupes amino (A+) de la polyamine (A) avec formation supplémentaire d'une liaison carbone-azote.

3. Procédé selon la revendication 1 ou 2, **caractérisé en ce que** le monomère (C) présente exclusivement les éléments carbone, hydrogène ainsi qu'oxygène et ne contient pas de groupe hydroxyle.

4. Procédé selon l'une quelconque des revendications 1 à 3, **caractérisé en ce que** le monomère (C) présente au maximum trois atomes d'oxygène, de préférence exactement un atome d'oxygène et 6 à 70, de préférence 6 à 32 atomes de carbone.

5. Procédé selon l'une quelconque des revendications 1 à 4, **caractérisé en ce que** le monomère (B) se trouve sous forme d'une lactone qui se trouve de préférence sous forme de caprolactone, de valérolactone et/ou de butyrolactone.

6. Procédé selon l'une quelconque des revendications 1 à 5, **caractérisé en ce que** la polyamine (A) est utilisée par rapport au monomère (C) dans un rapport pondéral de 1:0,1 à 1:100.

7. Procédé selon l'une quelconque des revendications 1 à 6, **caractérisé en ce qu'**on procède de manière telle qu'en particulier le monomère (B) est utilisé par rapport au monomère (C) dans un rapport molaire l'un par rapport à l'autre tel qu'après la fin de la 2ème étape, au maximum 5%, de préférence au maximum 1%, des groupes hydroxyle contenus dans le produit (consécutif) (ACB) se trouvent sous forme de groupes hydroxyle (H+) formés dans la 1ère étape.

8. Procédé selon l'une quelconque des revendications 1 à 7, **caractérisé en ce que** le monomère (B) est utilisé par rapport au monomère (C) dans un rapport molaire de 500:1 à 1:1.

9. Procédé selon l'une quelconque des revendications 1 à 8, **caractérisé en ce que** les paramètres de procédé sont choisis de manière telle qu'au moins 50% en mole des groupes amino (A+) sont déjà transformés par l'étape 1 et qu'au total au moins 70% en mole des groupes amino (A+) sont transformés par l'étape 1 et l'étape 2.

10. Procédé selon l'une quelconque des revendications 1 à 9, **caractérisé en ce qu'**on utilise principalement ou exclusivement uniquement les composants de réaction polyamine (A), monomère (C) et monomère (B), de telle sorte que le produit (consécutif) (ACB) contient, par rapport à sa masse totale, au total au moins 80% en poids, de préférence au moins 95% en poids d'éléments structuraux du groupe formé par la polyamine transformée (A), le monomère transformé (C) et le monomère transformé (B).

11. Procédé selon l'une quelconque des revendications 1 à 10, **caractérisé en ce que** la 1ère étape et la 2ème étape sont à chaque fois réalisées à des températures inférieures à 175°C.

12. Procédé selon l'une quelconque des revendications 1 à 11, **caractérisé en ce que** le produit (consécutif) (ACB) obtenu après les étapes 1 et 2 est transformé avec des acides monocarboxyliques aliphatiques, cycloaliphatiques et/ou aromatiques, qui contiennent à chaque fois 1-30 atomes de carbone, de manière telle qu'il se forme un produit (consécutif) (ACB) modifié par formation de sel et/ou par formation d'ester.

13. Procédé selon l'une quelconque des revendications 1 à 12, **caractérisé en ce que** le produit (consécutif) (ACB) obtenu après les étapes 1 et 2 est modifié par neutralisation avec un ou plusieurs acides organiques ou inorganiques ou par quaternisation.

14. Produit d'addition d'amine, pouvant être préparé selon le procédé selon l'une quelconque des revendications 1 à 13.

15. Utilisation d'un produit d'addition d'amine, pouvant être préparé selon le procédé selon l'une quelconque des revendications 1 à 13 ou selon la revendication 14, comme additif, de préférence dans des revêtements, en particulier des vernis, dans des matériaux synthétiques, dans des pâtes pigmentaires, dans des substances d'étanchéité, dans des cosmétiques, dans la céramique, dans des adhésifs, dans des masses de coulée, dans des masses contenant des pigments de la technologie des écrans plats, dans des masses de bouchage, dans des encres d'imprimerie et dans des peintures, de préférence dans des laques.

16. Vernis et/ou matériau synthétique contenant un produit d'addition d'amine selon la revendication 14.
